# EUROPEAN PATENT SPECIFICATION

(11) **EP 1 590 230 B1**
(45) Date of publication and mention of the grant of the patent: **08.11.2006**
(21) Application number: 04705857.3
(22) Date of filing: 28.01.2004
(51) Int. Cl.: B62J 27/00

(54) **INTEGRATED METHOD AND SYSTEM FOR THE SAFETY CONTROL OF SCOOTERS AND MOTORBIKES**
INTEGRIERTES VERFAHREN UND SYSTEM ZUR SICHERHEITSSTEUERUNG FÜR MOTORROLLER UND MOTORRÄDER
PROCEDE ET SYSTEME INTEGRES DE CONTROLE DE SECURITE POUR SCOOTERS ET VELOMOTEURS

(30) Priority: 30.01.2003 IT AN20030007; 14.07.2003 IT AN20030036; 07.08.2003 IT AN20030042; 27.08.2003 IT AN20030045; 19.11.2003 IT AN20030062
(43) Date of publication of application: 02.11.2005
(73) Proprietor: Bianchelli, Sauro, 60121 Ancona (IT)
(72) Inventor: Bianchelli, Sauro, 60121 Ancona (IT)
(74) Representative: Iannone, Carlo Luigi
(86) International application number: PCT/IB2004/000199
(87) International publication number: WO 2004/067365

(56) References cited:
- EP-A- 0 346 300
- EP-A- 0 533 329
- EP-A- 1 197 426
- WO-A-01/07281
- WO-A-89/02560
- WO-A-97/28710
- DE-A- 19 934 188
- FR-A- 2 677 856
- FR-A- 2 698 324
- FR-A- 2 747 987
- FR-A- 2 751 293

## Description

The present invention concerns an integrated system and a method for the safety control of two-wheel motorvehicles (motorbicycles, motorscooters and/or motorcycles), apt to prevent motion in case of irregularities on the part of the driver, and to penalise any inappropriate behaviours, to guarantee further safety during vehicular traffic. A safety control method and system as described in the preamble of claims 1 and 25 is known from the document EP 0 315 498.

The invention proposes to obtain these results instantly - or, eventually, in a deferred way, when required - with no possibility of deceit and/or falsification of the results on the part of the driver, especially in case of:
1) non-use of the protection helmet, or use of the helmet without fastening its safety strap; or
2) incorrect and/or dangerous use of the helmet while driving the vehicle (as in the case of removing the helmet and/or unfastening its strap while driving).

Further objects of the invention, always in connection with safety control, concern the possibility of preventing the driver from:
3) carrying a second passenger, when not allowed (due to the age of the driver or to the characteristics of the vehicle, motorbicycle and/or motorscooter);
4) driving in a dangerous way during the journey (excessive inclination of the vehicle, pitching, skidding) ;
5) travelling at an excessively high speed;
6) uninterrupted travelling for a period exceeding a maximum preset length of time;
7) travelling at night, after a preset time limit;
8) travelling in a state of drunkenness;
9) travelling without a protective airbag jacket; and the possibility of
10) using this same system also as a vehicle anti-theft device.

The object of the present invention is to thus propose an integrated system and a method apt to satisfy the above safety requirements in a simple way and with no possibility of deceit on the part of the driver. This object is reached by means of the characteristics indicated in claims 1 and 41 of the accompanying claims. The subordinate claims describe preferred characteristics of the system and method according to the present invention.

Further characteristics and advantages of the invention will anyhow be more evident from the following detailed description of some preferred embodiments thereof, given by way of non-limiting example and illustrated in the accompanying drawings, in which:
Figs. 1, 1a and 1b are, respectively, a very diagrammatic perspective view of a main electronic control unit of the system according to the invention (associated to the vehicle), the complete block diagram of the circuit of said control unit, and some structural details of the container of said unit on an enlarged scale;
Fig. 2 is a side view, also very diagrammatic, of a protection helmet for motorcyclists incorporating a second electronic control unit according to the invention, placing in evidence some structural features thereof;
Figs. 3a and 3b are, respectively, a rear view and a front view of the helmet shown in fig. 2 and of some components of the second electronic control unit;
Figs. 4 and 4a show, respectively, the container of the second electronic control unit and a block diagram of its electronic circuit;
Fig. 5 diagrammatically illustrates a speed sensor device associated to the protection helmet and to the second electronic control unit;
Figs. 6a, 6b and 6c diagrammatically represent, respectively, a front view, a top and a bottom view, and a cross-section view, of a mercury switch forming a balance sensor according to the present invention;
Fig. 7 shows the block diagram of an electronic circuit forming a third electronic control unit associated to a protective airbag jacket; and
Fig. 8 shows the block diagram of a type of remote control or radio control apt to communicate with the first electronic control unit.

### BRIEF DESCRIPTION OF THE SYSTEM

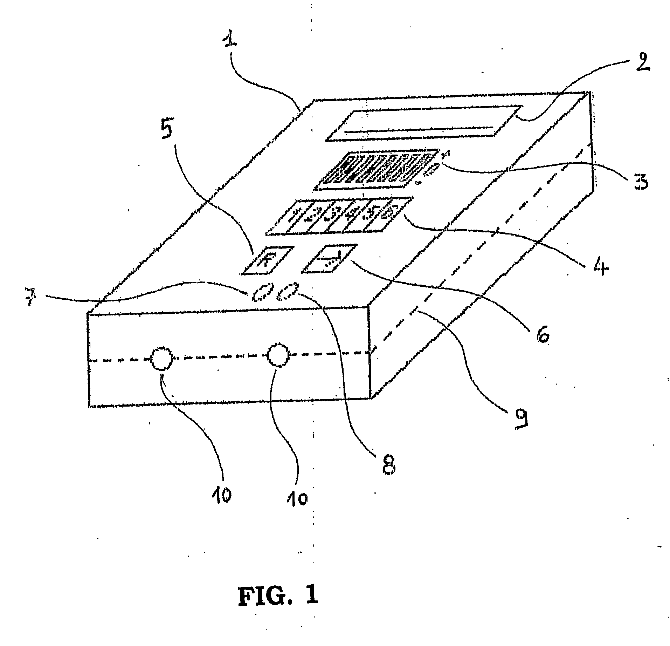

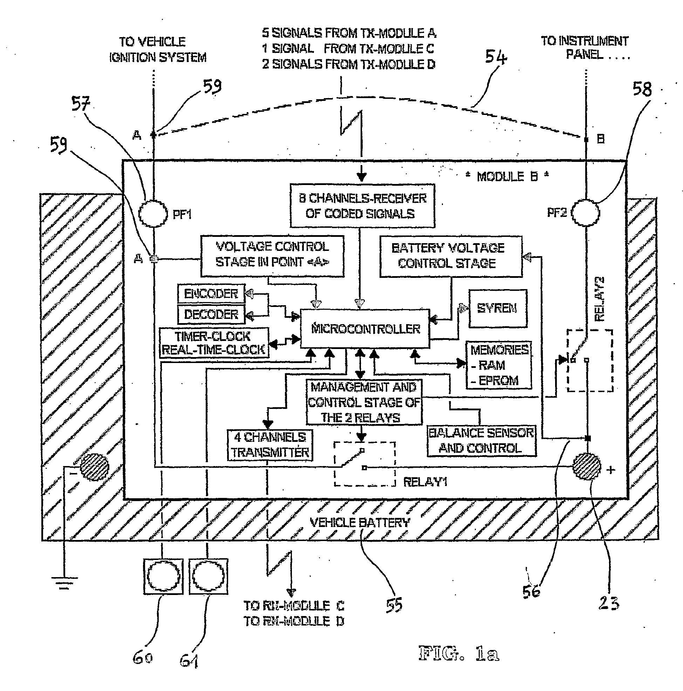

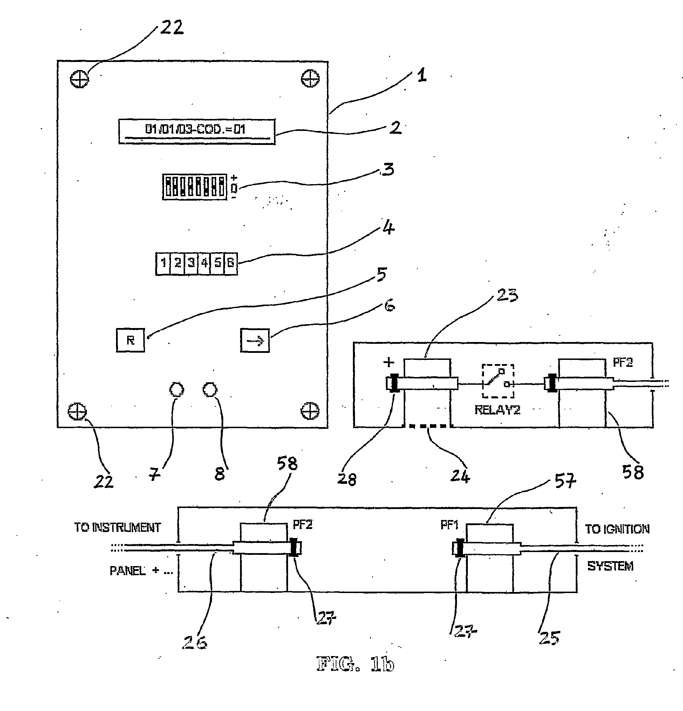

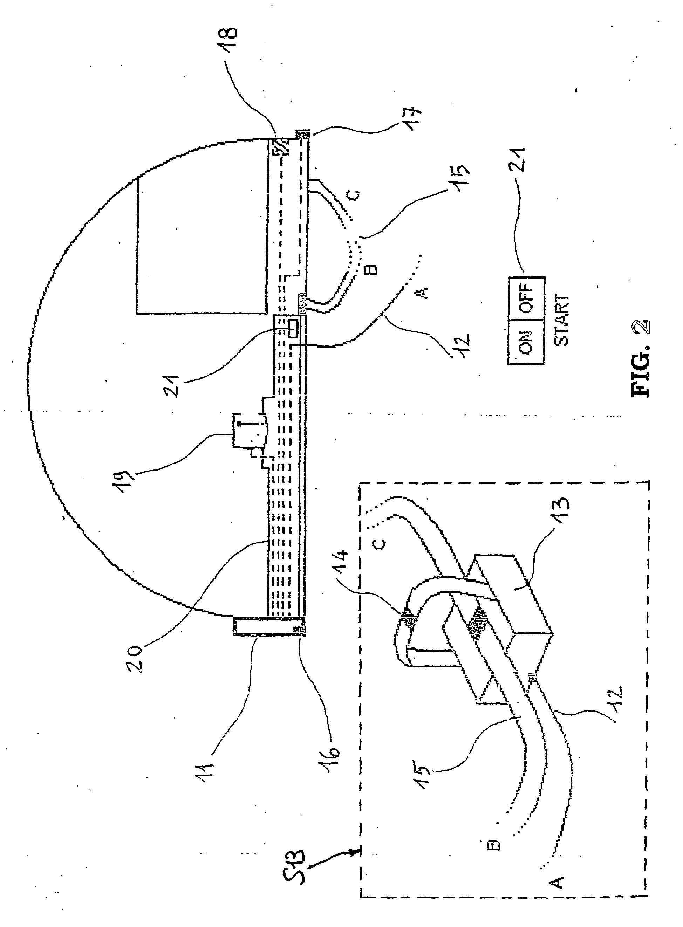

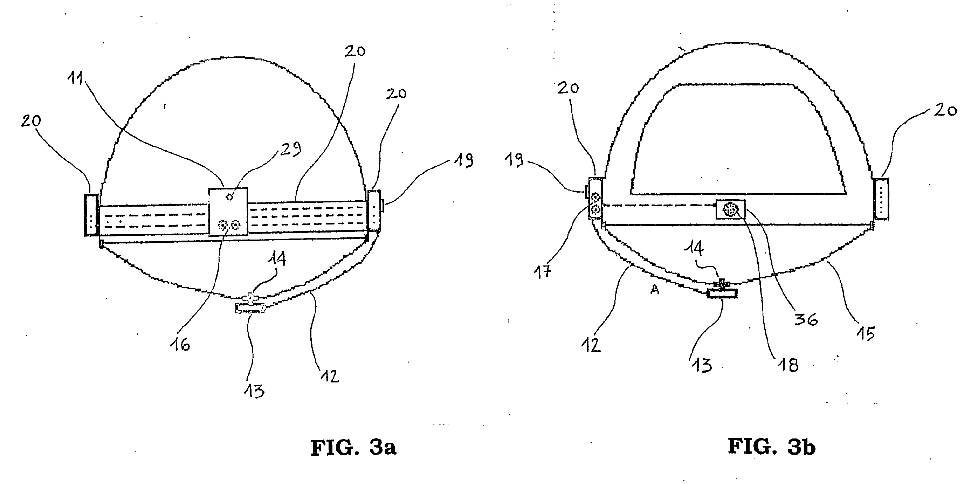

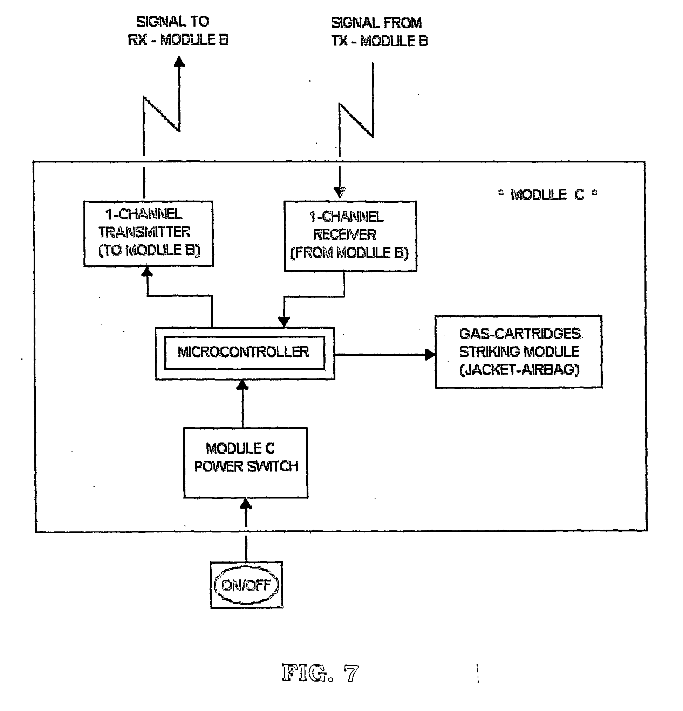

The system according to the present invention consists of three main parts, distinct and separate from one another, and precisely:
- a "first electronic control unit", installed on the vehicle and called hereinafter module B, positioned for example inside a container preferably arranged above the battery unit; alternatively, said container can be associated to the key switch or to another essential part of the electric system (see figs. 1, 1a, 1b).
- a "second electronic control unit", associated to the helmet protecting the driver's head, called hereinafter module A. This is positioned inside a container 11 (figs. 2 and 3a) arranged outwardly of the helmet protection shell, preferably in correspondence of the backside. The fixing of module A on the protection helmets already existing on the market is obtained by gluing, through both-sides adhesive tapes, through fixing by screws, silicone or the like; it is moreover possible to produce a helmet shaped so as to provide a suitable and comfortable housing for module A, always outwardly of the protection shell. It will be possible to house module A also inside newly-produced helmets, but only into the spaces allowed by standards. Part of the components of module A are also arranged in the front part of the helmet and/or in its safety strap - as better described hereinafter - and electrically connected to module A by means of conductors passing through two lateral bands 20 and connected to the container 11.
- a "third electronic control unit", associated to the jacket-airbag protecting the upper chest and neck of the driver, called hereinafter module C. This electronic control unit, illustrated in fig. 7, is housed for example in the same container housing the gas cartridges which - in known manner - cause the instant inflation of the airbag pads arranged in the jacket to protect the cervical area, the upper chest, the clavicles, the backside and/or the sacral area, at the moment in which the airbag starts to work.

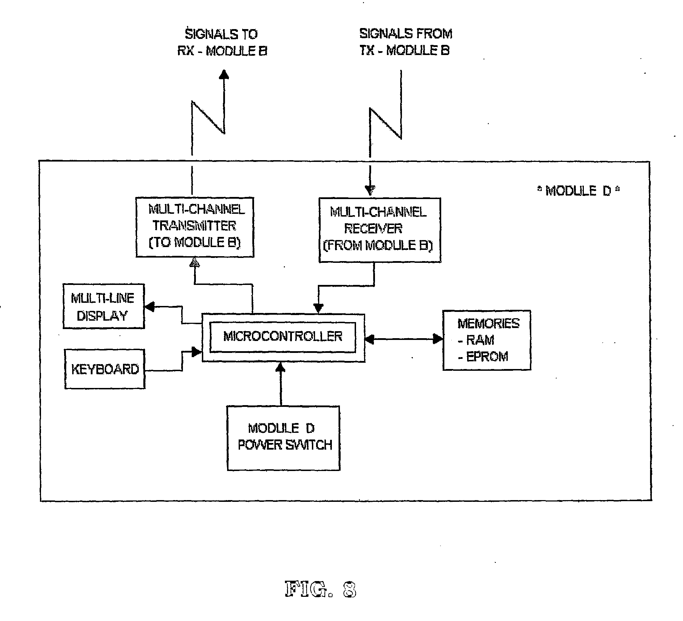

To these three main modules there is preferably associated also an additional
- "fourth electronic control unit", called hereinafter module D, substantially in the form of a remote control or radio control (see fig. 8).

The electronic control unit incorporated in each of the four cited modules comprises electronic processing means and/or data storage means, as well as a respective electric supply system, for example long-life inner batteries and/or rechargeable batteries.

The four modules are apt to communicate with one another through respective transmitting and receiving means; the communication is preferably obtained by means of airway transmission channels, for example multiple channels with radio-frequency signals; it is however possible (even if inadvisable, for practical and security reasons) to take into consideration also transmission channels making use of electric cables or conductors, having terminals apt to be connected with and disconnected from the respective modules. The information held in a transmitted radio-frequency signal will normally be provided by: synchronism + security code + channel start control; in actual fact, to guarantee a perfect integration and security between the various modules, the communications between them will be coded with identical security codes, apt to form a recognition element between the various modules. Alternatively, one could take into consideration the use of "dynamic" codes, namely variable following each new connection of the system.

### DETAILED DESCRIPTION OF THE MODULES

MODULE A - This part of the system forms the second electronic control unit, designed to be housed in the protection helmet: it consists of the following elements:

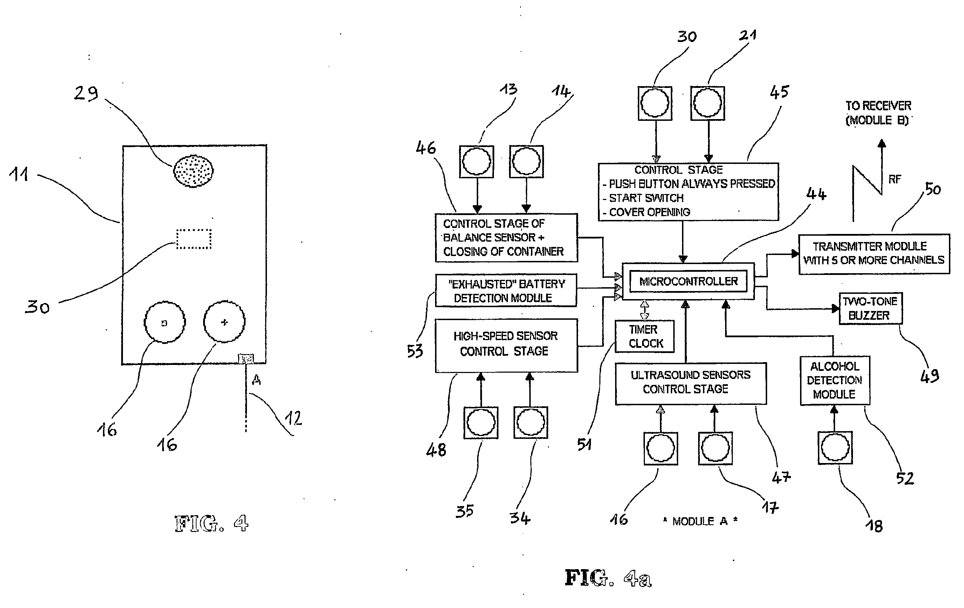

a) A microcontroller 44 (fig. 4a): this is meant to control and operate the periodical transmission (for example, every 5 sec.) towards the first electronic control unit (module B) - through at least five distinct channels transmitted in radio-frequency - of the signals produced according to the processing of information coming from a plurality of sensors associated to said module A. These sensors are described in detail hereinafter; their function is to cause, in module B, the issue of orders of consent or of stopping the motion of the vehicle on the basis of the circumstances detected by them.

When a sensor is in a state of alarm - that is, it starts to act due to the detection of an incorrect behaviour of the driver, for instance owing to non-use of the protection helmet - it sends the information to a microcontroller 44 and this latter, after suitable processing, stops sending a corresponding "carry signal" on a respective transmission channel towards the control unit of module B; this electronic control unit, failing even only one of the carry signals of module A, will provide for the required operations, as specified hereunder.

Generally, the operations of the first electronic control unit consist in sending a command to block the vehicle, when this latter is at a standstill, or else in sending an order to update a penalty table into a file memory of the microcontroller of module B, when the vehicle is in running conditions, for the purposes better described hereinafter.

The microcontroller 44 is equipped with a timer-clock, having the double function of supplying the current time, or some specific time bands, or else of operating a computation of the time elapsing, in association with internal memories, in specific conditions and in view of some of the checks which will be described in detail further on.

b) A transmitter 50 (fig. 4a) of coded signals; these will preferably consist of signals characterised by secret codes, with high security level, not reproducible, for the function better described hereinafter. The transmission takes place in radio-frequency (for instance, at the conventional frequency of 433,92 MHz), at preset time intervals (for example, as already said, every 5 sec.). The outward transmission from module A preferably takes place on at least five channels in succession (for example, according to increasing channel number), depending on the type of control signals issued by the microcontroller of said module A. The coded signals being sent are meant to be received by the receiver of module B (into the vehicle) and forwarded to the microcontroller of the first electronic control unit, for the purpose better described hereinafter.

c) A pressure sensor 30 (figs. 4 and 4a), with respective control stage 45, for example inserted in permanent contact with the external part of the helmet backside: this is apt to detect whether module A is being "disconnected" from the helmet. Both with the vehicle engine switched off, i.e. just before switching it on, and during the journey, the pressure sensor will always have to remain pressed (that is, always in "closed" circuit conditions, so as to be able to send its control signal to the microcontroller of module A). Viceversa, if the pressure sensor of module A should no longer operate due to lack of pressure of module A onto the helmet surface, it will produce a warning signal which will mean that the system has been tampered with by disconnecting the module A from the protection helmet. This warning signal practically consists in "stopping" the sending of the corresponding carry signal to the microcontroller of the first electronic control unit (module B).

The same warning signal will be sent also in case of an attempt to open or tamper the cover of module A (control by means of two small electric contacts "standing guard" over the cover).

d) At least one presence sensor; it is preferable (to avoid some types of deceits) to adopt a pair of presence sensors 16 and 17 (figs. 2, 3a, 3b, 4a), one of them (17) positioned into the front part and the other one (16) into the rear part of the protection helmet, and both being connected via cable to the circuitry of module A. Such sensors are preferably ultrasound sensors with detection of the return echo (with an operating frequency for example of 40 kHz), provided with a respective control stage 47, and they have a limited capacity, namely a limited range of action, included for example between 2 cm and 40-50 cm; they are apt to detect, through the actual return echo, the presence of obstacles and/or people close to the emission. They have a double function:
- on one hand, detecting the presence of an obstacle at a very short distance indicates that the protection helmet is not placed on the head of the driver, but for example inside the baggage carrier or in the glove compartment under the seat of the vehicle, or else between the legs or arms of the driver. The signal issued by the sensor is processed as a condition of "incorrect use of the helmet";
- on the other hand, detecting the presence of obstacles at a longer distance - but included between the maximum preset distance (that is, for example, about 50 cm.) - indicates the presence of a passenger on the seat behind the driver (forbidden in the case of underage drivers, or in the case of a vehicle not homologated for two people) or, even worse, standing in front of the driver (for instance, children standing between the seat and the handlebar). The signal issued by the sensor is processed as a condition of "unallowed presence of a passenger";
- finally, the presence of people or obstacles in general, at a distance longer than the maximum preset distance, will not indicate any incorrect behaviour of the driver. In this last case, the microcontroller of module A will continue to issue its normal carry signal towards the first electronic control unit (module B), which operates no intervention; whereas, in the first two cases, even if only one of the two sensors detects obstacles, or the presence of passengers within the preset distance, the respective sensor will send to the microcontroller of module A the respective warning signal, determining the further operation of module B.

e) A balance sensor positioned into a respective container 13 and associated to the control stage 46 (figs. 2, 4a); this sensor preferably consists of a mercury switch - of a type known per se - apt to issue a signal according to its inclination in respect of a horizontal plane. The signal is positive (i.e., switch on) when the sensor is in a horizontal position or slightly inclined, whereas it is negative (i.e., switch off) when the sensor is considerably inclined (for example, by about 45° or more).

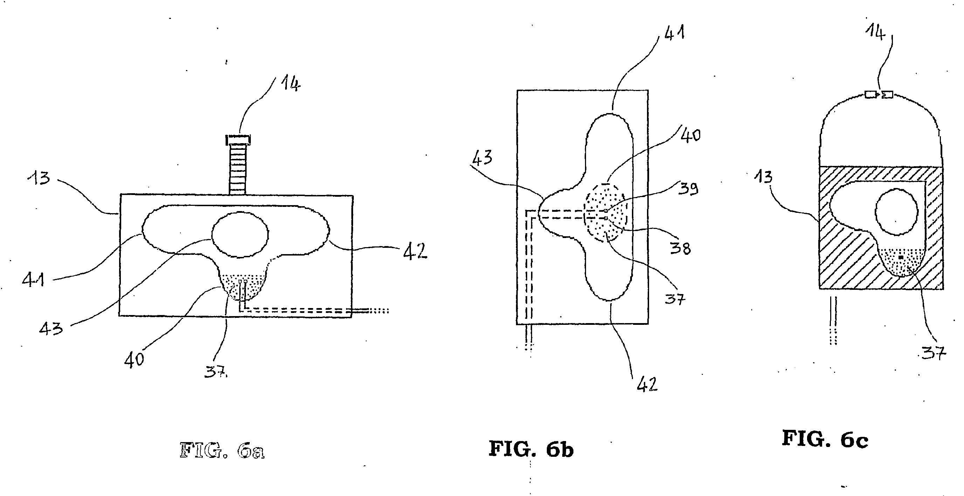

According to a preferred embodiment, the mercury switch is positioned into a bulb (or glass or other material) having a very special shape - illustrated in figs. 6a, 6b and 6c - actually conceived to perform the various functions described hereunder. As seen, the bulb is in the shape of four lobes: its lower lobe 40 contains a certain quantity of mercury 37, into which is plunged - when the sensor is in a horizontal or slightly inclined position - the pair of electric contacts 38, 39, which then issue the signal "on". The two lateral lobes 41, 42, are meant to collect the mercury 37 when the bulb takes up a considerable inclination to the left or, respectively, to the right; in so doing, the contacts 38 and 39 remain in the open air, issuing the signal "off". Likewise, the rear lobe 43 is meant to collect the mercury when the bulb is considerably inclined backwards and, in so doing, the contacts 38 and 39 also remain in the open air and issue a signal "off".

The outgoing signal from said mercury balance sensor is generally quite weak (due to scarce conductivity of the mercury and to a possible expansion thereof following the current passage); hence, if required, the outlet of the sensor can be combined with a slight electronic amplification stage (known per se and thus not described in further detail).

Said balance sensor is designed to be associated to the safety strap of the protection helmet, in the manner illustrated on the enlarged detail S13 of fig. 2 and described in point f) hereunder, with reference to the "coupling sensor". As can be understood at once, said sensor is first of all apt to verify the correct use of the "safety strap allowing to close the helmet"; in fact, "only" when the strap of the helmet is closed and correctly fastened, is the position of the balance sensor substantially horizontal, that is, its inclination does by no mean reach the angle of about 45° indicated as reference angle. When the mercury switch is "on", it indicates a correct use of the helmet with its safety strap fastened. Viceversa, if the helmet safety strap should be unfastened, thereby "hanging down" - whereby the helmet is not correctly worn -, the mercury pours into one of its lateral lobes, 41 or 42 or 43, and the sensor takes up the "off" position, issuing a warning signal.

Nevertheless, in its "off" position, said sensor is apt to detect also the following conditions of incorrect behaviour:
in the case of reckless driving, with a forbidden excessive inclination of the vehicle: the mercury switch in turn takes up a position which is too inclined sideways; the corresponding inclination of the bulb to the left (41) and to the right (42) leads to opening of the mercury switch and thus to the issuing of a warning signal;
- in the case of reckless driving, due to a forbidden "pitching" of the vehicle: the mercury switch is too inclined backwards; the corresponding strong inclination backwards of the bulb (43) leads to opening of the mercury switch and thus the issuing of a warning signal.

In both cases, the warning signal issued by the balance sensor is sent towards the microcontroller of module A and, through the respective transmission stage, also towards the first electronic control unit (module B), so as to be interpreted as an "incorrect behaviour causing penalties".

To reckon with further certainty the aforecited dangerous manoeuvres - such as excessive inclination of the vehicle, pitchings, skiddings or the like - it is possible to insert a second balance sensor (of the mercury type or of another type, of a shape similar to the one already described, and illustrated in figs. 6a, 6b, 6c) also on the vehicle chassis frame, directly associated to the first electronic control unit (module B). It will then be sufficient, with the vehicle in running conditions, for at least one of the two sensors to be set in alarm (either in module A or in module B), so as to start up the procedure updating the penalty table.

f) A coupling sensor, in the form of a tripping connector 14 (figs. 2, 4a, 6a, 6c), is moreover provided to allow, in association with the balance sensor 13, a control of the proper fastening of the helmet safety strap 15. The physical closing of the tripping connector 14, coupled with the container 13 of the balance sensor, causes also the electric closing of the control circuit of the balance sensor. In other words, to "close" said circuit, there will have to be a "double" electric contact: on one hand, the contact between the two electric wires inside the bulb, mutually connected thanks to the mercury only when the balance sensor is in an almost horizontal position (thus indicating that the helmet safety strap is in a correct position); on the other hand, the contact of the switch associated to the tripping connector 14 coupled with the container 13 of the balance sensor around the safety strap 15 of the protection helmet (fig. 2); only this allows to make sure (preventing various tricks) that the helmet safety strap is really fastened. Thus, also the signals issued by said coupling sensor are apt to supply a further indication of the correct or incorrect conditions of the helmet being worn.

The balance sensor 13, 14 is connected to the second electronic control unit (module A) by means of conductors 12 (figs. 2, 3a, 3b). To guarantee even more that during the journey the protection helmet is worn in a correct manner, it is possible to make use of very short conductors 12; in particular, these may be just long enough to ensure, with no problems, the connection of the balance sensor (with its container) around the safety strap 15. This will allow to prevent the further trick of a regular fastening of the safety strap but using its maximum extension in length and thus leaving a lot of space between said strap and the driver's chin, such as to make it practically possible for the helmet to slip off the head of the driver; in this assumption, the short conductors 12 would end up either getting disconnected from the container 13 or withholding said container 13, shifting it sideways and thus in an inclined position, thereby giving rise to a warning signal issued by the balance sensor.

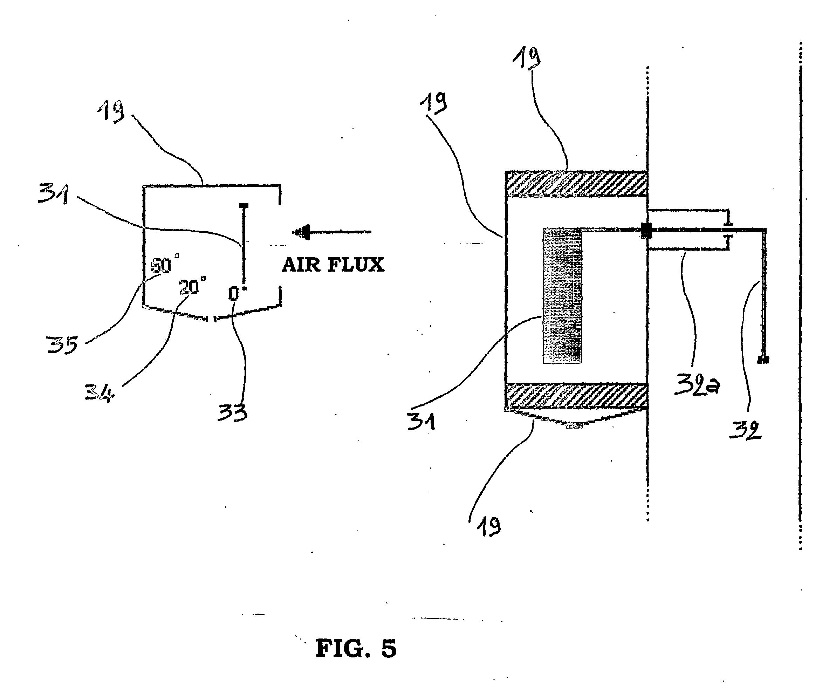

g) A high-speed sensor 31 to 35 (fig. 5), with respective control stage 48 (fig. 4a). This sensor can be active only with a moving vehicle, to detect and memorise the speed peaks beyond a preset speed limit. Such a sensor, when associated to the protection helmet, can take up - according to the present invention - the shape illustrated in fig. 5, which consists of a small "flagstaff" 31, rotating or oscillating by a full angle (for example of about 60-70°) about a rotation axis perpendicular to the outer lateral surface of the helmet. During the journey, said flagstaff 31 is subjected to air pressure (which increases, the higher the vehicle speed), in opposition to the action of a counterweight 32, or of a spring 32a, or the like.

The oscillation amplitude of the flagstaff 31 will cause, thanks to the parallel motion of an electric sliding contact (placed inside module A and not shown in detail), the issuing of a signal practically proportional to the speed of the air, that is, of the vehicle, which is then sent to the microcontroller of said module A.

Said speed sensor is set, through experimental gauging, so as to open or close two branches (for example of a voltage divider) of the circuit of the control stage of the high-speed sensor, so as to indicate for example the two following speeds of the vehicle:
- About 20 Km/h (indicated by 34 in fig. 5): when the vehicle, several times during a journey, either exceeds or travels below said speed, and the speed sensor issues a corresponding signal, this guarantees that the sensor has not been tampered with or blocked (in fact, if it were so, the flagstaff would always remain blocked in a certain position and would not supply any useful signal); the passage at said speed will thus indicate that the speed sensor is working in a correct way.
   It should be noted that if, viceversa, the flagstaff had been blocked or tampered with, so as to always remain fixed in a position corresponding to any speed - for example, included between 0 Km/h (indicated by 33 in fig. 5) and 20 Km/h, or else between 20 and 50 Km/h - it would be possible, in all these cases, to provide the sending of a warning signal to update the penalty table with the code "speed indicator tampered with". On the other hand, this same function can also be utilised to avoid the deceitful attempt of removing the speed sensor from the helmet: once removed, said sensor would no longer issue any signal, which could be interpreted in the same way as the tampered speed indicator. The same applies in the case of not wearing the protection helmet, but placing it for example in the baggage carrier or in the glove compartment of the vehicle: the flagstaff 31 will always remain fixed in one position.
- About 50 Km/h (indicated by 35 in fig. 5): this speed is taken as a reference for a speed limit, by way of example, in view of any possible penalties. When the contact closes the circuit branch corresponding to said speed, the speed sensor issues the corresponding signal to the microcontroller of module A which will in turn send a warning signal to the microcontroller of the first electronic control unit (module B), to update the penalty table with the code "speed too high".

It is of course possible to act so that, before sending the warning signal, the microcontroller of module A operates, for some seconds, a "buzzer" apt to warn the driver that he is exceeding the speed limit, so as to allow him to reduce the speed and avoid the penalty; if, after said time interval, the speed sensor continues to issue its signal, the procedure to update the penalty table will then be started without fail.

To avoid the deceit of putting "a stop" in the flagstaff before the position of speed limit (beyond which the penalty would become effective), so as to never allow reaching the same, it is possible to put a protection cover 19 (figs. 2 and 5) around the flagstaff of the speed sensor; such a cover, as well as having the function of preventing said deceit, will be very useful also to protect the flagstaff from any impacts or from rain, and to improve conveying the air flux towards the sensor during running of the vehicle.

Finally, the proper working of the speed sensor (namely the constant oscillation of the flagstaff due to the air flux towards the helmet, varying according to the change of speed) is apt to indicate that, during the journey, the protection helmet continues to remain in the correct position, namely on the driver's head (the only position in which the flagstaff of the sensor is no doubt apt to oscillate in a continuous and regular way). Also, this signalling can be processed in the sense of indicating that the helmet is worn in a correct way.

To control that a certain preset speed limit has possibly been exceeded, it is possible to make use - as well as of the aforedescribed speed sensor - also of the data sent by the module detecting the "voltage rates of the vehicle battery" (as better described hereunder with reference to module B).

As already briefly mentioned, all these controls of the sensors of module A, if carried out with the vehicle engine switched off (that is, before it starts running), may determine that the first electronic control unit (module B) does not allow the regular starting of the vehicle; this is particularly true in the case of signalling an incorrect use of the protection helmet. However, when the controls are carried out with the vehicle in running conditions, it is impossible for the first electronic control unit to operate in the same way, if nothing but for the risks which could derive from an order to stop the vehicle in running conditions; it ensues that each warning signal generated with the vehicle in running conditions is recorded as a "penalty" into a special memory of module B and subsequently used as a deterrent to discourage the recurring of infractions.

A way to obtain this deterrent result - according to the method of the present invention - consists in that, upon the "subsequent starting of the vehicle" or when "initially starting the vehicle on the following day" (this last case is preferred in order to avoid any problems to the driver if too far from home), the first electronic control unit (module B) operates first of all an access to the memory of the penalty file for infractions committed and, if required, it sets on a compulsory "penalty/waiting time" before being able to start off the vehicle, signalling this condition to the driver. It is evident that, in order to avoid such a waiting time, the driver will be far more careful, while driving, in behaving correctly and respecting the limits.

In order to pursue a real deterrent function, such a waiting time will have to be sufficiently penalising, for instance from a minimum of 1 hour up to a maximum of 24 hours; this, of course, according to the state of "recidivism" of the driver, or of the number of infractions being repeatedly committed, as well as to the seriousness of the infraction. Such a compulsory waiting time may be imposed either at the first new ignition of the vehicle immediately after the penalisation or, even better, (thanks to the presence of the timer-clock module) at the first new ignition in day-time, starting from the day subsequent to the penalisation.

To warn the driver of the detection, by the electronic control unit, of infractions in a general sense - that is, not only in the case of excessive speed or of failure to wear the protection helmet - it is possible, following each recording of penalty, to cause said control unit to issue a signal - for example a sound signal, by way of a buzzer 29 (fig. 4) with respective control stage 49 (fig, 4a) - so as to urge the driver not to continue with the same infraction.

Another way to obtain the same deterrent result, especially when the driver is under-age and under parental control, is to place at the parents' disposal means allowing to read the memory of the penalties, for example on a suitable display.

g) A start switch 21 (figs. 2 and 4a) with respective control stage 45: it is used for the switching on/power supply of module A, namely to start/end the transmission of signals towards module B; to improve the operation of the system, the driver - before pressing the start switch - must wear the helmet correctly and fasten its safety strap, thereby connecting the respective balance sensor, and he must only subsequently switch on the vehicle engine (which, in any case, could not start off if no sequence signals are sent to detect the regularity of the procedure). The start switch may be switched off only after stopping the vehicle since, in the contrary event, if it should be switched off while the motorcycle is in running conditions, the electronic control unit in the vehicle (module B) is preset so that, if it receives no more signals from module A, it updates the penalty table in a multiple way thereby seriously penalising the next start-off of the vehicle.

h) A timer-clock module 51 (fig. 4a): its purpose is to supply the current date and time, to determine referential time-bands and/or to make time computations, starting from initial instants. It is mainly used to determine the time-bands for "compulsory alcohol tests".

i) An alcohol test module 18 (figs. 2, 3b, 4a) with respective control stage 52 (fig. 4a), to detect the alcohol fumes in the driver's alveolar air. Similarly to the method already known in literature to perform alcohol tests on drivers of 4-wheel vehicles, also in the case of 2-wheel vehicles it is possible to make it compulsory to carry out an alcohol test; this obligation could be limited, for example, to the start-off within a specific time-band considered "dangerous" (for instance, between 1.30 and 3.30 p.m. and between 9.00 p.m. and 5.00 a.m.), or even merely to a nightly time-band (between 10.00 p.m. and 5.00 a.m.) controlled by means of the timer-clock module.

A sensor of alcohol fumes is positioned:
- in "crash" helmets (optimal case): directly in the shell, in the front central area in correspondence of the driver's mouth (as indicated by the detail 18 in figs. 2 and 3b);
- in "non-crash" helmets: inside a nozzle (to be blown into), fixed to the outer lateral surface of the helmet and being manually approached to the driver's mouth by way of a small movable articulated arm; at the end of the test said arm with nozzle will be put back in a lateral position.

The operations to be carried out during the alcohol test will be the following (they may also be facilitated and followed step-by-step by means of sound signals issued by a small loudspeaker controlled by module A):
- within the compulsory time-band the module A will issue, through a buzzer, a special sound (or a voice signal, in the event of the respective module being fitted with a loudspeaker) to warn the driver that he is obliged to carry out the alcohol test;
- the test may start only after the helmet and its safety strap have been correctly worn and nobody else is present near the helmet, whereby the corresponding sensors (balance and ultrasound) have not been set in alarm; this will allow to avoid any possible attempts of deceit and/or falsification of the results (as, for example, the replacement of the driver at the end of the test, or getting other people to blow into the nozzle, or using pipes, or others still);
- once having checked that the various sensors have not been set in alarm, the driver will have to open a small protection cover 36 (fig. 3b) of the sensor (to prevent any deceits such as the use of solvents, perfumes or other substances which could alter the percentage of alcohol contained in the alveolar air blown out); the opening of the cover will send a signal of the open/closed type to the microcontroller of module A, which will thus be in a position to check "when" such a cover has been opened (to prevent the deceit of opening the same before time, so as to spray onto the sensor any forbidden substances);
- after having opened the protection cover, the driver may blow into the alcohol sensor and check the alcohol percentage in his own blood;
- at the end of the alcohol test, the cover will have to be closed again (buzzer or warning sound signal), otherwise the control signal cannot be issued (this is to avoid the trick of leaving it always open and thus spraying therein forbidden substances);
- in the event that the alcohol percentage in the blood should fall within the standards, the microcontroller of module A will provide to send signals (for example into channel no. 1) towards module B; viceversa (namely in the event of an incorrectly performed test, or of an alcohol percentage in the blood higher than normal), it will stop sending the carry signal towards module B, thereby also stopping the starting of the vehicle.

1) A module to detect "exhausted batteries" 53 (fig. 4a): it supplies a signal when the batteries supplying module A start to get exhausted. To prevent problems to the driver - as no longer being able to start the vehicle since module A appears to be "off" - the system operates as follows:
- when module 53 detects a voltage rate such as to consider the approach of the situation of "insufficient charge" of the batteries (for instance, when the voltage rate turns out to be 15-20% below the nominal charging value or the maximum charging value), the multi-channel transmitter of module A sends to the receiver of module B a coded warning signal of "insufficient charge";
- when module B receives said signal, it operates according to the modes illustrated in detail in point i) referring to the receiver of module B illustrated hereunder.

MODULE B - This part of the system forms the first electronic control unit; it is installed on the vehicle (for example, above the battery cell or in the area of the key-switch, or in another position of the electric system). This control unit consists in the following components:

m) A receiving module with 8 or more channels (fig. 1a): it is apt to receive coded signals issued by the transmitter of module A, by the transmitter of module C and by the transmitter of module D. All such transmitters obviously operate at the same frequency and they are all marked by the same secret code; the sequences of coded signals received, at preset intervals, will have the following logic meanings:
- active reception channel no. 1: it means "pressed control push-button" (namely, operative module A, not disconnected from the protection helmet), or "alcohol test within standards";
- active reception channel no. 2: it indicates "presence sensors not in a state of alarm" on module A. It means: no obstacles or presence detected in the vicinity of the protection helmet, absence of unallowed passengers, helmet on the head;
- active reception channel no. 3: it indicates "balance sensor not in a state of alarm" on module A. It means: helmet safety belt "fastened" (with the vehicle engine still switched off or in running conditions), or else "no driving breach" (only in the case of a vehicle in running conditions);
- active reception channel no. 4: it indicates "speed sensor not in a state of alarm" on module A. It means: speed within the limits and non-tampered-with sensor;
- active reception channel no. 5: it indicates "protective airbag jacket sensor not in a state of alarm" on module C. It means: jacket being worn (before starting of the vehicle engine and while running);
- active reception channel no. 6: it indicates "sensor of battery conditions not in a state of alarm". It means: batteries of module A being charged;
- active reception channel no. 7: it indicates a request (from module D) of transmission of the data concerning the penalty table (type of infractions committed, with date and time of infraction);
- active reception channel no. 8: it indicates a request (from module D) to start/stop various functions of the system.

Said receiving module of the electronic control unit B will obviously be apt to communicate on the same radio-frequency, with coded signals, of the transmitters of modules A, C and D, with an operating frequency of, for example, 433,92 MHz. It will send to the microcontroller of module B the sequences of signals received in the various channels. To avoid setting the system in alarm, only the three following sequences of signals will, for example, be possible:
- with the vehicle engine still switched off: channels no. 1 + no. 2 + no. 3 + no. 5;
- with the vehicle engine already switched on/running: channels no. 1 + no. 2 + no. 3 + no. 4 + no. 5;
- to disconnect the system (with the vehicle switched off): channels no. 1 + no. 1 + no. 1 (or another sequence).

n) A microcontroller module (fig. 1a) with associated timer-clock and memories: its primary function is to process and operate the various sequences of signals coming from the transmitters of module A, of module C and of module D, into the channels described heretofore with reference to the receiving module, so as to give - by means of actuators known per se, such as relays or the like - the consent to the starting of the vehicle engine (connection of the vehicle to its power supply/battery and/or to the key switch and/or to another point of the electric system) in case of sequential reception of signals into the channels no. 1 + no. 2 + no. 3 + no. 5.

Its additional function, during the journey, in the "absence" of signals (for a certain lapse of time) in the sequence of channels no. 1 + no. 2 + no. 3 + no. 4 + no. 5, is to update the memory of the penalty table (with date/hour and event code); out of the first five penalty codes, four of them concern module A and one of them module C, and they coincide with the respective channel number, while the successive penalty codes relate to other infractions - see further on - or an eventual recidivism (or repetition of infractions), and to attempts of tampering and/or forcing module B, or else to the "exhausted" condition of the batteries of module A.

More synthetically, the microcontroller operates, with the vehicle engine switched off, by processing the carry signals, or rather the absence of carry signals, as stopping signals, namely signals of no permission to start the vehicle engine or, in case the vehicle is already in starting and/or running conditions, its processing will lead to an updating of the penalty table, with the consequence of introducing a limitation in the use of the vehicle, more precisely a temporary stop, in a subsequent (even not immediate) attempt of new ignition.

The microcontroller is apt to perform also the following further controls or functions:
- control of the "vehicle conditions" (that is, on or off): this control is essential for the proper working of the system, in that the carry signals of modules A, B and C must determine - as said - different operations according to whether the vehicle engine is switched off and at a standstill, or in running conditions. This control is carried out by means of a stage to detect the voltage rates at the ends of the vehicle battery (fig. 1a), for example by way of an integrated circuit, type LM3914, or another equivalent circuit;
- intervention on the "power supply of the vehicle" through opening or closing of two relays R1, R2 (see further on), in order to either enable or stop vehicle ignition (also with an anti-theft and anti-tampering function) ;
- updating in memory (fig. 1a) a "journal file" of the various signals received (with number of the channel received and date) and determining (after access and checking of the penalty table) whether the vehicle engine may be started at once after reception of the start command, or whether it should be started with a certain delay (which could vary, for example, from a minimum of 1 hour up to a maximum of 24 hours) due to previous inappropriate behaviour of the driver. As already mentioned, various penalty codes are foreseen, according to the seriousness of the infraction committed and/or to the recidivism of the driver.

The microcontroller of module B must also operate the signal coded in channel no. 6 which, as said, stands to indicate the condition of "insufficient charge" of the batteries supplying module A; in this case, to avoid creating problems to the driver, module B will operate as follows:
- if module A is "operative" and indicates "batteries with insufficient charge", module B will continue to perform the controls foreseen, as usual, on the exact sequence of the signals received, so as to allow or not the starting of the vehicle, but it will "not update" the penalty table during circulation of the vehicle;
- if module A is "inoperative", that is, none of the foreseen signals is any longer received by module B, the system will still allow the starting of the vehicle, without the required sequence of signals coming from module A and, furthermore, it will not update the penalty table for any infractions eventually committed during circulation of the vehicle, except for those committed only on that day (for instance, up to 6.00 a.m. of the next morning).

Consequently - also in order to prevent any attempt of deceit with the trick to intentionally exhaust the batteries - on the next morning the vehicle will no longer be able to start off if the batteries are still exhausted (that is, if module A should continue not to send the correct sequence of signals towards module B). Moreover, to encourage providing as promptly as possible to charge (or replace) the batteries, each time a condition of "exhausted batteries" occurs, the penalty table is updated with 1 hour delay, to be made up for at the subsequent daily ignition of the vehicle.

Thanks to the presence of the "timer-clock" and of the module to control the "vehicle conditions" (on or off), the microcontroller of module B is apt to directly check and control (independently from the reception of signals from module A) the following two cases of "incorrect driving" on the part of the driver:
- travelling uninterruptedly, or anyhow keeping the vehicle engine switched on - without ever stopping the same even for a minimum amount of time, for example 5 minutes - for a period exceeding a preset time T1 (for example of 30 minutes); such a time period is foreseen to be chosen by a relative of the driver, such as one of his parents, who can memorise it by means of module D (or directly on module B); said behaviour is classified, with reference to the above list, as a penalty code = 6;
- travelling after a certain time at night (for instance, after 11.00 p.m.) for a period exceeding a preset time T2, which is however less than the previous time T1 (for instance, 5-10 minutes, just the time to get back home from not too far off); said behaviour is classified, with reference to the above list, as a penalty code = 7.

In both cases, the microcontroller of module B will check, by means of the timer-clock, the time and length of the journey and, through the module controlling the vehicle conditions, whether this latter is on or off; when the vehicle engine results to be in running conditions, the microcontroller of module B starts counting the time, also controlling and memorising the starting date and time.

Going into further detail, the microcontroller proceeds in the following way:
- as the vehicle engine is switched on (voltage control at the ends of the battery, see point c) hereunder), it records the time and date;
- it starts counting the time;
- if the vehicle engine is switched on at a time beyond the preset night time, the microcontroller checks whether the maximum time T2 foreseen for the night journey is exceeded; in the affirmative case, the penalty table is updated with the event code = 7;
- if the vehicle starting time does not exceed the night time limit, the microcontroller checks whether the maximum time T1 of uninterrupted journey is or is not exceeded; in the affirmative case, the penalty table is updated with the event code = 6.

o) A module to control the "state of the vehicle battery" (fig. 1a): this electronic circuit, which detects with sufficient precision the voltage rate at the ends of the vehicle battery 56 (fig. 1a), is apt not only to check the on/off condition of the vehicle, but also to detect - with no other connection with different elements of the vehicle - the following situations (the rates indicated hereunder are given by mere way of example, with reference to a battery with a nominal rate of 12 Volt - the real rates must be defined after appropriate tests and checks on the various types of vehicles):
- battery voltage at 12 Volt = vehicle engine switched off (not in starting conditions);
- battery voltage at 12 Volt = vehicle engine in starting conditions, but at a standstill (accelerator in idle conditions): such a voltage rate is almost equal to that of the vehicle engine not in starting conditions;
- battery voltage exceeding 12,5 Volt = vehicle engine running at a minimum speed, generally corresponding to 20-25 Km/h;
- battery voltage around 13,5 Volt = vehicle engine running at an average speed, generally below 45 Km/h;
- battery voltage close to 14-14,5 Volt = vehicle engine running at high speed, beyond the foreseen limit;
- battery voltage under 10 Volt = vehicle battery on the way to be exhausted.

The detection of these voltage rates allows to define the following important situations and to provide for the following operations:
- once the engine has been turned off - situation of standstill defined by a "basic voltage", for example of 12 Volt - the microcontroller of module B provides to open the relay R1 (in fig. 1a), removing the power supply to the vehicle ignition system; in this way, the vehicle engine cannot be started again before the expected controls are carried out and overcome, particularly the checks concerning the correct use of the helmet, and so on;
- once a certain speed has been reached - situation defined by a voltage exceeding 13-13,5 Volt - the microcontroller of module B provides to disconnect the use of the ultrasound presence sensors; in fact, at such speeds, said sensors are no longer necessary but, on the contrary, they could supply (even though highly unlikely) erroneous information. Such sensors will however be connected again (that is, module A will start sending again the signals in channel no. 2, if there are no alarms) as soon as the vehicle speed is reduced (battery voltage dropping below 13 Volt);
- once a speed limit has been exceeded - situation defined by a voltage exceeding 14-14,5 Volt -, the microcontroller of module B provides to reckon with more precision, in association with the "high-speed sensor" associated to the protection helmet and positioned on the oscillating flagstaff, the moment in which the alarm should be set on because the vehicle is travelling at too high a speed (discontinuance to send carry signals on channel no. 4, and consequent updating of penalty table with event code = 4). This check on the voltage rate, combined with the speed sensor on the helmet, appears to be essential since the movement of the flagstaff, for various reasons (wind blowing in an oblique direction, helmet not positioned in line with the air flux, rain effects, or other events), could also not be in a position to signal the point of maximum preset speed (35 in fig. 5) although the vehicle is travelling at such a speed. It is hence possible to preset module B so that it updates the penalty table (with the event code = 4) as soon as it receives even only one of the two warning signals of "too high speed"; there is hence a double check on the vehicle speed, even without interacting with other parts of the vehicle, such as the speedometer, the fuel flow, or the like;
- in any other case - situation defined by voltage between 12 and 14,5 Volt - the microcontroller of module B is in a position to check at which approximate speed any possible "dangerous manoeuvres" are being carried out, such as excessive inclination of the vehicle, pitching and/or skidding, so as to be able to reckon, on the basis of memorised parameters, as to whether or not the penalty table should be updated, avoiding an excessive penalisation of the driver. For example, if the speed detected were to be lower than about 30 Km/h, it will be possible not to penalise the driver for excessive inclination of the vehicle; on the contrary, said same speed could be considered sufficient to update the penalty table in the event that at least one of the two balance sensors should be set in alarm (either the one positioned into the strap of the protection helmet, or the one directly inserted in module B), indicating the "dangerous" manoeuvre.

p) Two relays, both placed "to protect and insulate" the positive pole of the battery and/or key-switch (or another vital part of the electric plant of the vehicle). The relays are the following:
- Relay R1 (fig. 1a): when the contact is on, there is a connection between the positive pole of the battery 23 and the cable supplying the ignition device (the vehicle engine may be started). The contact of the relay R1 "closes" when, with the vehicle still switched off, the microcontroller of module B receives the correct sequence of signals in channels no. 1 + no. 2 + no. 3 + no. 5, namely: control push-button pressed (that is, module A switched on and in contact with the helmet surface, and alcohol test within the standards) + ultrasound sensors not in a state of alarm (that is, no detection of obstacles or passengers near the helmet) + balance sensor not in a state of alarm (that is, helmet correctly worn and fastened strap) + protective airbag jacket duly worn (signal of consent from module C).
   Whereas the contact of relay R1 is "open" when, always with the vehicle engine switched off, the module B does not receive even only one of the signals in channels no. 1, no. 2, no. 3 and no. 5. Besides, the relay R1 is opened by the microcontroller of module B each time the vehicle is stopped (condition detected - as mentioned in point c) - by the control of the battery state).
- Relay R2 (fig. 1a): when the contact is on, there is a connection between the battery and the instrument panel, lights, horn, and other services: this contact is obviously "always closed" in normal operating conditions. Nonetheless, in the event that - in a fully irregular way - a "connection bridge" 54 should be formed between the cable supplying the instrument panel and the cable of the vehicle ignition system - in order to by-pass (exclude) the "opened" relay R1 (which would thus not allow the vehicle to start off) - the microcontroller of module B would be in a position to place in evidence this situation. In fact, with a "opened" relay R1, the microcontroller should detect a voltage of 0 Volt at point 59 (fig. 1a) whereas, in the case of a "bridge" 54 between points 59 and 58, the voltage would be at the battery nominal rate, that is, generally at 12 Volt. If module B then reckons that, with the relay R1 opened, the voltage at point 59 is higher than 0 Volt, the microcontroller causes the immediate opening of the relay R2, thereby removing the power supply to the "entire vehicle" and thus making fruitless the attempt to deceive the system with the by-pass. The relay R2 will be closed again only when the voltage at point 59 returns to 0 Volt (always with the relay R1 opened).

It is interesting to note here that, given the impossibility to start the vehicle engine "without the protection helmet and jacket" associated thereto (associated in the sense that, as said, these three elements of the system are characterised by a common transmission coding of the respective modules A, B and C), this circumstance allows the system to be used also as an efficient "anti-theft" device, both with the vehicle engine switched off and in parked conditions (namely, in the absence of a driver, protection helmet and airbag jacket), and in the event of robbery with the vehicle engine in running conditions, since in this case it is sufficient for the driver to set off an alarm by means of one of the various sensors (that is, by switching off for example module A or module C) and to then immediately turn off the vehicle engine.

q) A balance sensor with respective control stage (fig. 1a): also module B can be equipped with a balance sensor similar to that installed in module A (that is, for example, a mercury sensor), to detect any possible driving inappropriate behaviours or dangerous manoeuvres on the driver's part (with the vehicle engine switched on and in running conditions), as for example, inclining/bending too much the vehicle, skidding, pitching; in case of alarm, even if the other balance sensor (that associated to the helmet) should not have been set in alarm, the module B will anyhow update the respective penalty table.

r) A transmitter with 4 or more channels (fig. 1a) : this is used to send towards module C (fig. 7) - in the event that a warning signal should have been issued by the sensors detecting the falling of the driver from the vehicle - a control to release the airbag, namely a control for immediate inflation of the various pads contained in the jacket.

Such a control will be sent to the receiver of module C when the microcontroller of module B has received the following warning signals, with the vehicle running at a speed for example higher than 20 Km/h (detected through the usual control of the voltage rates at the battery ends):
- from the weight sensor 60 (fig. 1a) positioned into the driver's seat, when it "feels no weight" on the seat (front part);
- from the weight sensors positioned into the driver's footrest carpet 61 (fig. 1a), when it "feels no weight" on the carpet;
- from the balance sensor associated to the protection helmet, when it detects excessive inclination of the head.

The same transmitter will moreover be used to send to module D (remote-control/radio-control assigned to the parents or employers) the signals or information relating to the penalty table.

s) A weight sensor 60 on the "driver's seat" ; it is a sensor of the on/off type (driver seated/unseated), which allows to check the presence, or absence, of the driver (as well as the possible presence of a second passenger seated behind the driver).

Said weight sensor shall be installed under the driver's seat and split into two separate parts: one part into the front side of the seat to detect the presence, or not, of the driver, and the other part into the rear side of the seat to detect (in combination with the use of the pair of ultrasound sensors installed in module A) the presence, or not, of a second passenger behind the driver.

This sensor allows to more positively detect the presence of a second passenger seated behind the driver, in combination with the use of two pairs of ultrasound sensors, as described hereabove. It will then be sufficient for at least one of these sensors to be set in alarm in order to allow the positive detection of the second passenger.

t) Carpet-level weight sensors placed in the footrest area 61: they are of the on/off type and, detecting the driver's leg weight, signal the driver's presence in the vehicle.

u) A pair of function keys 5 and 6 (figs. 1 and 1b): placed on the outer surface of the cover of the container of module B, they have, respectively, the "sequential scroll" function, to highlight and read the various data stored in the memory on a display (these same data can be read by means of the module D also), and the reset function, to reset all the data of the penalty archive, for example once the data have been read;

v) An access code/dip-switch 3 (figs. 1 and 1b), for example an 8-way, 3-mode (+, -, 0) switch, equipped with an encoder-decoder (fig. 1a). Such an access code allows, on the one hand, to read and reset the various data stored in the penalty memory and, on the other, to allow the opening of the cover of the module B whenever it is essential to access such module. Such access code will, of course, be issued to a driver's relative (or guardian); in any case, though, the opening can occur only after entering the correct "combination" of a further key-operated lock (see below, point n).

The list of existing codes "events - penalties", each with the associated date and time, in the penalty archive, may be structured for example as follows:
1 = control button not pressed or attempt at tampering with module A or irregular alcohol test;
2 = ultrasound sensors in a state of alarm (helmet not on head or unallowed passengers present) ;
3 = balance sensor in a state of alarm (unfastened strap, with switched off or running engine, or detection of dangerous manoeuvres while driving the vehicle);
4 = vehicle running at excessive speed or tampered speed sensor;
5 = airbag-jacket not worn;
6 = uninterrupted travel of excessive duration (vehicle engine switched on for a length of time above a preset limit);
7 = night-time travel beyond a preset time;
8 = attempt at tampering with module B;
9 = batteries of module A not recharged or replaced in time;
10 = progressive penalty number (increased every time an event code from 1 to 9 is recorded).

The progressive penalty number (indicating the driver's recidivism and therefore the delay after which the vehicle engine may be switched on) can be reset manually/spontaneously only by a parent or employer (by means of a suitable archive access code), or automatically, i.e. without the parent's intervention, in the case of the driver having committed no further irregularities for a certain length of time (for example one month); this will be an excellent incentive for the driver to behave correctly!

w) a combination lock, the combination consisting of six or more digits (4 in figs. 1 and 1b): it is used to open the cover of the container of module B after entering the correct access code. Access to the inside of this container allows - as already mentioned - to reset the penalty archive; however, it is also possible to deactivate the entire system (by means of a simple on/off switch, which will be used also for reactivation), steadily closing the two relays R1 and R2, should special circumstances require it, under the supervision, for example, of a relative or of an employer.

A combination lock (rather than one with a standard key), or a dip-switch device is preferable, because - in extreme circumstances - the system may be deactivated even remotely, for example by communicating the secret codes or the combination via a telephone call.

x) a multiple-line, 16-column display (2 in figs. 1 and 1b) to read the information stored in the memory, such as the penalty archive, or possible data concerning tampering attempts of module B, or to read data through an access code;

y) a pair of LEDs 7 and 8 (figs. 1 and 1b): for example a green LED (which, when on, indicates the correct operation of the system and, when off, indicates malfunctioning) and a red LED (which, when on, indicates a state of alarm, due to a penalty or tampering or incorrect driver behaviour);

z) a siren (inside module B and self-powered: fig. 1a) : switching on upon microcontroller input for different lengths of time, it indicates - with an essentially deterrent effect - cases of incorrect driver behaviour, in particular dangerous manoeuvres or manoeuvres at excessive speed, or tampering attempts, theft attempts, or power supply interruption attempts, or even a maximum allowed number of "system deactivation" commands being reached for reasons of urgency of necessity.

If module B, as already said, is in some way tampered with, this event is immediately detected by the microcontroller operation diagnostics and stored in the memory, together with the date and time of such an event; this will subsequently be easily verifiable by the driver supervisor (parent or employer).

All the components of module B are housed inside a single container 1, made of a sturdy material, which is preferably positioned above the battery body (fig. 1a); as diagrammatically shown in fig. 1b, this container features, in its bottom part, a hole 24 having a diameter only slightly larger than that of terminal 23 of the positive end of the battery. The container of module B can therefore be mounted on top of the battery, ensuring that hole 24 is engaged with terminal 23, onto which it is subsequently locked with known retaining means, which at the same time accomplish the electrical connection of the positive end with relays R1 and R2.

As a measure of increased safety, with a similar arrangement it will be possible to introduce also the negative end of the battery into the container of the module B.

In the outer wall of the container of module B, the LCD-type display 2, the dip-switch 3, the lock 4, and the two function keys 5 and 6 will be arranged.

### SYSTEM DEACTIVATION

To deactivate the system and allow use of the vehicle without any supervision (which should be allowed only in exceptional cases), it is necessary to electronically or mechanically close the relays R1, R2 on the vehicle power supply system. To this purpose, first of all it is necessary to open with the key the vehicle seat, then open the cover of the container of module B, and subsequently depress the respective button of the deactivation switch (on/off); such button/switch causes the electronic closure or, in case of malfunction, the mechanical bypass of the two relays R1, R2, consequently allowing to start the vehicle engine. To open the cover/module B, the following procedure must be adopted:
- enter the correct access code/dip-switch (8-way, 3-position switch) ;
- enter the correct combination to open the corresponding mechanical "lock";
- remove the four screws at the vertexes (a further inconvenience to prowlers).

To reactivate the system it is sufficient to depress again the deactivation switch; once the system is reactivated, the microcontroller of module B immediately opens relay R1, whereas relay R2 remains closed.

It is possible to temporarily disable the system verification procedures. For cases of real urgency and/or necessity, the option to start the vehicle engine for a maximum number of times, for example 3, can be planned in (following which a new "credit" must be applied for at a parent or other driver guardian, which credit must be entered in a suitable archive of module B by means of a secret code), without any control by the system (that is, control of: helmet being worn, strap being tensioned, no passenger, etc.) and, especially, without paying off any possible penalty of a compulsory waiting time. The driver can for example operate according to the following procedure:
- depress 3 times consecutively the "start" key/switch (or other possibly added or alternative key) ; now, within a preset time limit which must not be exceeded (to avoid false alarms, confusion or spurious signals), the microcontroller of module A sends a sequence of three signals in the only channel no. 1 (i.e. no. 1 + no. 1 + no. 1) to module B, which is interpreted as a permission to start the vehicle engine (that is, similarly to the sequence of signals no. 1 + no. 2 + no. 3 + no. 5 seen above, which allows to close relay R1 and therefore to start the vehicle engine). At this point the microcontroller of module B, as soon as it receives one such sequence of signals, provides first of all to update in the specific archive the progressive number of already used exemptions and makes sure that the maximum preset number has not been exceeded. If the number of exemptions has not been exceeded, it allows to start the vehicle engine; in the opposite case, it prevents engine start (that is, it does not close relay R1) and activates for a few seconds the siren mounted in module B: in order to move, the driver must take all the usual system tests.
   In case of malfunctioning (or empty battery) of the module A mounted in the protection helmet, or of the vehicle-mounted module B, in order to manually start the vehicle engine (therefore bypassing the malfunctioning system and also closing relay R1), but only once (after which the vehicle must be taken for repairs, i.e. a new credit must be applied for to a supervisor), the following procedure can for example be adopted:
- operate on the cover of module B simultaneously pressing the function keys "reset" and "sequential scroll" (5 and 6 in fig. 1b); in case of such keys or of the whole module B malfunctioning, it is still possible to open the module cover and to manually "deactivate" the entire system (with electronic closing or mechanical bypass of the two relays).

### MOUNTING

It has already been shown that module A can easily be mounted on a helmet available on the market, or built into a helmet equipped with specific housings. Mounting of module A can equally be accomplished both building the module into the vehicle during assembling at the manufacturing plant, and mounting it onto a vehicle already in use, for example applying and fixing module B on top of the battery body 55 (figs. 1a): the connectors/clamps of the power supply cables of the "vehicle engine ignition system" and of the "instrument panel" must be separate from one another and, passing through specific holes 10 at the sides of the container (fig. 1), they must then be installed inside the container of module B, tightening the screws of the respective clamps 27 (fig. 1b): the first one 25 (vehicle engine ignition system) into connector 57 PF1, and the second one 26 (instrument panel and other vehicle services) into connector 58 PF2.

Before carrying out such operation, the positive end 23 of the battery (figs. 1a and 1b) will already have been introduced into the container of module B by means of a suitable hole 24 at the base of the module and locked (from the inside) by a suitable retainer/screw clamp 28 in the manner already mentioned before. This integral fixing to the base of the container prevents the positive end of the battery from being forcibly removed from the container of module B; in this manner the positive end of the battery will be insulated both electrically (thanks to the presence of the two relays R1, R2), and physically, i.e. it will be effectively protected from prising open and/or tampering.

Any "tampering attempt" of the module B (or of a part thereof) mounted in the battery recess of the vehicle - such as, for example, opening/prising open of the cover, attempt to remove the module, or power interruption -, will be immediately detected, with the consequent activation of the following deterrents:
a) activation, for several seconds, of the (self-powered) siren associated to and inside module B;
b) switching on of the red alarm LED, which can be reset only with the access code;
c) registration, in the microcontroller memory, of the "tampering attempt" with date and time and event code; such data are visible on the display and may be reset only by using the access code.

MODULE C - This part of the system makes up the third electronic control unit. Such module (fig. 7), fixedly mounted in the airbag jacket, will have a twofold function:
- of activating itself upon the simple activation of an on/off switch, and of transmitting a consent signal in channel no. 5. On the basis of this signal, module B is capable of verifying that the jacket is being worn, and consequently of giving a corresponding consent to the starting of the vehicle engine and to the circulation thereof; and further
- of controlling the ignition of the gas cartridges for the immediate inflation of the various pads arranged in the airbag jacket, once the signal of "driver fallen" is received by the transmitter of module B.

For increased safety, airbag deployment can occur in the ordinary way too, by means of pulling a suitable string; the deployment can then occur according to the fastest control between the two.

Module C consists of the following components:
- power switch module C (to be closed before starting the vehicle engine);
- microcontroller (to best manage all the operations);
- 1-channel transmitter (at the same frequency of the other modules) for sending signals to module B;
- 1-channel receiver to receive the airbag deployment signal coming from module B;
- module to control the deployment of gas cartridges for jacket inflation.

MODULE D - This part of the system makes up the fourth electronic control unit. Such module (fig. 8) is essentially in the shape of a radio control and is issued to a person or organisation supervising the driver (for example a parent or employer), who will in turn have the same secret code of access; this module will preferably be used in addition to, but possibly also alternatively to, the direct use of module B. The module performs the following functions:
- it receives from module B (by means of a radio frequency receiver module) all the data concerning the "behaviour" of the driver during circulation, i.e. the possible infractions committed (with date and time) ;
- activates and/or deactivates one or more of the various control functions actuated by the system (through the radio frequency transmitter module), sending executive signals through coded signals issued to module B;
- allows to reset the archive of the penalties corresponding to the possible infractions committed by the driver, that is, to cancel the "compulsory waiting time" before being able to start the vehicle engine (always sending suitable executive commands to module B);
- finally, it also allows to control possible attempts at tampering with the system; in actual fact, if, following a request to "unload" the data relative to the penalty archive, no signal arrives from module B, this will mean that said module does not work anymore, i.e., that it has been tampered with in some way. In particular, in the case of tampering using a bridge/bypass, module D will receive from module B a signal indicating that, despite repeated infractions committed by the driver, the vehicle engine has always been "started", hence that tampering has occurred. In practice, control of module B in this respect is accomplished, on the one hand, thanks to the stage detecting the voltage at the battery ends, indicating that the vehicle was started, and on the other, thanks to the information contained in the penalty archive; if this information is such that it should have prevented starting of the vehicle engine for a certain period of time, module B (as well as updating its penalty archive with the event code = 8, and possibly activating, as an immediate deterrent, its in-built siren) sends a signal of "system tampering alarm" to module D, signal which will be used by the supervising person or organisation in the way they shall deem most appropriate.

### SYSTEM OPERATION STEPS

As a mere non-limiting example, the various system operation steps in a typical day are listed:
1) "starting vehicle engine": whenever one wants to start the vehicle engine, the system will have to be active. The engine in an off mode can be started only when module B receives from module A the sequence of signals capable, as said, of allowing the starting of the engine; else, the vehicle will not be able to move (module B will inhibit motion by means of relay R1 which, remaining open, will keep disconnected the power supply of the vehicle engine ignition system). Even in the (limited) case of sending a sequence of signals in the channels no. 1 + no. 1 + no. 1 (which will indicate a system disabled for reasons of urgency or necessity) within a certain time from switching on module A, it will be possible to start the vehicle engine (i.e. closure of relay R1).
2) permission to start the vehicle engine and "initial verification test" to avoid possible tampering: the driver will have to "correctly" wear the helmet on his head, fasten its safety strap, wear his airbag jacket and take no passengers; such operation will have to be carried out according to the following procedure:
   a) with the vehicle engine off, wear the helmet on the head without fastening the safety strap thereof;
   b) switch on module A by means of the "start" switch (which, after the initial test step, will start sending the various sequences of signals to module B);
   c) before giving or not permission to start the vehicle engine, the system will carry out a "functionality test" of some sensors to check for possible tampering, damage or malfunction:
   c.1) set in alarm the 2 ultrasound sensors by placing hands in front of them at a certain minimum distance (for example 10 cm.), which will be calculated by the sensor control stage (to avoid further tampering); this test will be extremely useful to check that the sensors are not covered (which would impair their functionality) or damaged/malfunctioning; the functionality test of the sensors (that is, of their capability to be set in alarm correctly) will be very short (for example 1-2 seconds) and the end of such test will be signalled by the sound of the buzzer which will therefore indicate to remove the hands from the ultrasound sensors to stop setting them in alarm; the sound of the buzzer, therefore, will signify: sensor functionality test (alarm) pass; end of the sensor alarm test; after the buzzer has sounded, such sensors must not be set in alarm anymore, since that may also mean a tampering (covering, etc.) or damaging attempt thereof and in such case it would not be possible to start the vehicle engine (that is, the correct sequence of signals in the channels no. 1 + no. 2 + no. 3 + no. 5 would not be sent to module B);
   c.2) optional: move with a finger the flagstaff of the high speed sensor to avoid possible tampering (such as blocking of the flagstaff) with vehicle engine off; this test will be voluntary, that is, it is not required for the purposes of the above said test;
   c.3) fasten (only after having pressed the system start switch and having set in alarm with the hands the 2 ultrasound sensors) the helmet safety strap with the corresponding balance sensor container around it; in this way the functionality of such sensor (set in alarm, with the strap unfastened) will also have been tested, consequently avoiding the possible cutting of the connecting cables (between the sensor and the microcontroller of module A) with ensuing short circuit between them, to disable said sensor;
   d) if, during the initial verification test, one or more sensors are not set in alarm, consequently highlighting tampering and/or malfunctioning, the microcontroller of module A will inhibit issuing (to module B) the correct sequence of signals in the channels no. 1 + no. 2 + no. 3, which would allow starting of the vehicle engine; at this point the only possibility to start the vehicle engine, in case of necessity or real urgency, will be to follow the procedure detailed in the following pages; if, instead, during the initial verification test (which will end only when all the sensors in question have been checked and therefore only after the fastening of the helmet safety strap) all the tested sensors were set in alarm, the following procedure will be carried out:
   e) if, after the end of the "verification test" and for a few seconds, no more alarm by the various sensors (ultrasound, balance sensors, etc.) of module A is detected, the vehicle engine may be started immediately, if the current time is not within the compulsory alcoholic test time band. This occurs thanks to the issue of the correct sequence of signals in the channels no. 1 + no. 2 + no. 3 + no. 5, which will allow the closure, on the part of the microcontroller of module B, of the relay R1, which connects the battery to the engine ignition system; otherwise the alcoholic test will have to be taken, and only in case of a blood alcohol level within the limit will the signal be sent in the channel no. 1, which (together with the other 3 signals) will allow to start the vehicle engine.
3) "During the journey": ("regular conditions" test by module B, through simultaneous detection of the voltage at the ends of the vehicle battery to verify the condition of the vehicle/motion and the receipt - at preset intervals - of the sequence of signals in the channels no. 1 + no. 2 + no. 3 + no. 4 + no. 5) the system will check for possible "incorrect" and/or "dangerous" behaviour on the part of the driver, such as:
   a) "attempt at removing the helmet with the engine on, but with a stationary vehicle": the system will detect such infraction by means of the 2 ultrasound sensors (which will be set in alarm due to the detection of obstacles or of a presence within a radius of about 50 cm), the balance sensor (which cannot move excessively from its nearly horizontal position), and the speed sensor (whose flagstaff, in order to work correctly, will have to oscillate from one position to the other and not to remain stationary); thanks to all these sensors, managed and controlled by the microcontroller of module A, it will be possible to avoid attempts at deceit, such as removing the helmet and placing it in the baggage carrier or in the helmet carrier under the seat, or else between the legs of the driver; moreover, thanks to the fact that the receiver of module B, during the journey (i.e. with a vehicle in motion), in order not to update the penalty archive, will always have to "continue" acquiring all 4 signals from module A, it will not be possible to use the helmet to start the vehicle engine and to then leave it at home or in the garage (that is, removed from the vehicle);
   b) "attempt at unfastening the safety strap": the system will detect such infraction by way of the balance sensor (which will be set in alarm at inclinations over 45° to the horizontal plane) and its container (which will be set in alarm in case it is opened during the journey); in case of alarm there will be no issue of a signal in the channel no. 3 (and therefore update of the penalty archive with code 3) ;
   c) attempt at "blocking the high speed sensor" (this attempt at deceit can be carried out also with the engine switched off): avoided thanks to the particular operation mode of the sensor which, in order not to set in alarm the microcontroller, during the journey will have to "oscillate" repeatedly about the "minimum" position, for example about 20 km/h, thus repeatedly opening and closing a circuit branch of the "speed sensor" control stage (connected to the microcontroller of module A); in case of alarm = no issue of signal in channel no. 4;
   d) attempt at "removing module A from helmet" and attaching it somewhere else in the vehicle (this attempt at deceit can be carried out also with the engine off): such deceit will be avoided thanks to the "control button" (setting in alarm, if it is not pressed, the microcontroller), the ultrasound sensors (which will set in alarm the microcontroller in case of detection of an obstacle/presence within a set radius), and the speed sensor, which, in order not to set in alarm the microcontroller, will have to oscillate repeatedly during the journey: thus it will be pointless to try and attach module A to the outer front frame of the vehicle (the only place where the ultrasound sensors might not detect obstacles within a set radius, for example 50 cm), because the speed sensor - due to its protection cover and to the flagstaff not facing the direction of motion of the vehicle - will be prevented from oscillating. Besides, the particular function of the balance sensor will force the driver to attach it (by way of a hook suitably mounted on the vehicle and well visible, further deterrent) so that during the journey it maintains a nearly horizontal position, to avoid the risk of setting it in alarm;
   e) detection, by means of the pair of ultrasound sensors (and/or weight sensor arranged in the seat/rear area), of a "second passenger", seated behind the driver, or of a child standing in front of the driver (in case of alarm, no issue of signals in the channel no. 2 = update of the penalty archive/event code = 2);
   f) detection of some types of "dangerous driving", such as excessive inclination in bends, pitching and skidding/falling: they will be detected thanks to the mercury balance sensor which, due to its peculiar shape (figs. 6a, 6b, 6c), will be able to detect abnormal helmet inclination, sideways or forwards (when a maximum inclination, for example of 45°, is exceeded, the mercury inside the bulb will open two electric contacts, thus insulating a specific circuit branch connected to the sensor control stage); in case of alarm = no issue of signals in the channel no. 3 = penalty archive updated with code = 3;
   g) detection of "high speed" : it will be verified by the speed sensor which, if the small flagstaff reaches the position equivalent to the preset limit speed (for example about 50 km/h), will set in alarm the microcontroller of module A which, is such case, will not send the signal in the channel no. 4 to module B anymore (with consequent update of the penalty archive - event code = 4).
      All these incorrect or dangerous behaviours will update the penalty archive in module B; the microcontroller of module B, in fact, not receiving during the journey (control of such condition through the verification of the voltage values at the battery ends) the sequence of signals in the channels no. 1 + no. 2 + no. 3 + no. 5, will update - with an "event code" coinciding with the number (or numbers) of non-transmitted channels - the corresponding penalty archive (in EPROM memory). The penalties, to be paid off at the following starting of the vehicle engine, will consist in a "compulsory waiting time" before being able to start the engine, which time varies according to the number of irregularities committed, for example from a minimum of 1 hour to a maximum of 24 hours (in cases of heavy recidivism, or of multiple and repeated infractions).
      The reading and possible resetting of the data stored in the penalty archive can occur only through an access code (8-way, 3-mode dip-switch) issued to a relative (and not to the driver) and/or to an employer of the driver.
   h) attempt at "removing the airbag jacket"; not receiving the signal in channel no. 5 anymore (from the module C integrated in the jacket), the microcontroller of module B will update the penalty archive with an event code = 5;
   i) detection (with ensuing update of the penalty archive in EPROM memory), by the microcontroller of module B, of some inappropriate behaviours on the part of the driver, such as:
      - driving uninterruptedly (or keeping the engine running) for a period of time exceeding a preset limit (preset by a relative, for example 30 minutes) without ever stopping and switching off the engine at least for a minimal time (for example 5 minutes): penalty code = 6;
      - driving beyond a certain night-time limit (for example after 11 pm) for a length of time exceeding a preset limit (for example 5 minutes, just enough to go home from not too far away): penalty code = 7.
4) "Turning off engine" - After switching off the engine it is necessary to switch off the start/power switch of module A also; in case of forgetting, the driver will be advised (to turn off module A) either by the tone of the buzzer (mounted in module A), which - only with a turned off engine (i.e. issue of signals only in 4 channels) - will sound in case of sensors in a state of alarm (for example when the strap is unfastened to remove the helmet), and/or by the LED, built-in in the switch itself, which will indicate the module being "on" by blinking. Only for economy's sake will it also be necessary to turn off the power supply of module C (airbag jacket).

With the engine off and immediately after the vehicle was in motion (verifications of such 2 sequential states of the vehicle, on/in motion and then off within a certain time, by checking the voltage values at the ends of the battery/vehicle), the microcontroller of module B will not update the penalty archive anymore (even if module A was still on, or even set in alarm by some sensor) and will open relay R1 (thereby disconnecting the power supply to the engine ignition system). With relay R1 open, the system will be able to function also as an effective vehicle anti-theft device, since - in order to close relay R1 and thereby start the engine - it will be necessary to have the driver's helmet and airbag jacket, wear them correctly and hope that there is no delay penalty to pay off before starting the engine (effective deterrent to thieves or prowlers).

Since the condition of "turning off" the vehicle engine is a very important time for correct system management, and since the voltage value at the battery ends diverges slightly when the engine is "off" and when it is "on but stationary and running idle", and since it is considered a "more easily marketable solution" not to intervene, if possible, on "other parts" of the vehicle (such as, for example, the speedometer, the fuel flow, etc.) to verify the actual condition of "engine off", in the following are disclosed, with further description details, all the operation steps to be carried out during the turning off step and all the tests and verification procedures that the system will adopt in order to avoid errors, deceit, and/or tampering:
4.1) The microcontroller of module B will consider the vehicle engine as being "off", and therefore open relay R1 disconnecting the vehicle battery from its starting system and deactivating the penalty archive (i.e., from that moment onwards the penalty archive will not be updated anymore, even in the presence of sensors in a state of alarm), when:
   - the voltage at the battery ends stays more or less constant at values below threshold values (for example 12.5 Volts) (below such voltage values the engine may actually be off or on, but stationary and running idle, whereas above such values the vehicle will certainly be in motion) and module A (mounted in the protection helmet) is switched off (= no further issue of signals to module B); in this case relay R1 will immediately be opened (by the microcontroller of module B) and the penalty archive deactivated (this is the correct case that every driver should follow) ;
   - the voltage at the battery ends stays more or less constant at values below threshold values (for example 12.5 Volts) and module A is still on (consequently, further issue of signal sequences to module B, which therefore keeps the penalty archive active/updateable), module B will open relay R1, not straight away but after a certain waiting time (for example 20 minutes), provided in such time the voltage has never exceeded the threshold value (for example 12.5 Volts) (which would indicate that the vehicle is in motion). Such waiting time will be useful to be able to manage without errors the actual case too (therefore no deceit on part of the driver) of an engine not off, but running and stationary (with a battery voltage value similar to that of a switched off engine - for example below 12.5 Volts -); of course, if - during such waiting time - module A was switched off and the voltage at the battery ends was still below such threshold, the microcontroller of module B would immediately open relay R1 and deactivate the penalty archive;
5) Special cases and control of attempts at deceit
   5.1) If, during such waiting time, the battery voltage then exceeded the threshold value (thereby indicating that the vehicle is now in motion and not turned off or stationary anymore!) and module A was still switched on (= issue of signals to module B), the microcontroller of module B will keep closed relay R1 and, obviously, will keep always active the penalty archive;
   5.2) If, during such waiting time or even afterwards, the battery voltage exceeded the threshold value (thereby indicating that the vehicle is in motion and not turned off or stationary!) and module A was instead switched off (artifice, attempt at deceit), the microcontroller of module B - the vehicle being in motion and receiving no more signals from module A - will keep closed (since the vehicle is in motion) relay R1, but will update in a multiple manner (= 4 infractions, because no more issue of all 4 signals) the penalty archive (effective deterrent to sly characters), so that to turn on the engine next time the waiting time will be considerable (for example 4 hours) ;
   5.3) If, once module A is switched off and the battery voltage if below the threshold value (therefore relay R1 is open and the penalty archive is deactivated), the voltage at the battery ends later exceeded the threshold value (for example above 12.5 Volts, which would mean that the engine was not off, but only stationary and running idle), in this case the microcontroller of module B will immediately reactivate the penalty archive (which will be updated at once, since module A - being switched off - cannot issue the signal sequence) and close relay R1 (in order not to interrupt the power supply, for example of the horn and to have the battery recharged by the running engine); keeping module A switched off with the vehicle in motion is not a very bright attempt at deceit, because it will later backfire on the driver, since - at the following daytime engine start up - there will be a lengthy waiting time to be paid off before being able to turn on the engine;
   5.4) if, with the vehicle in motion (battery voltage above threshold values), the already switched off module A (therefore active and up-to-date penalty archive and relay R1 closed), were to be switched on again later, the microcontroller of module B will always keep closed relay R1 and will keep active the penalty archive (signal sequences begin to be sent again from module A to module B) to record further possible infractions (and therefore further delays to add up to the ones already reckoned).
      In synthesis, in order not to suffer the heavy (and multiple) penalties, when the voltage at the battery end exceeds the threshold value (and therefore the vehicle is in motion), module A will justly always stay switched on.
      Furthermore, as a further safety measure, so as to "also" avoid tampering and/or a theoretically impossible deceit, the microcontroller of module B - once it has closed relay R1 (storing in the EPROM memory the date and time of the closure and/or opening of relay R1 and relay R1) - if relay R1 remained in such state (closed) uninterruptedly for a set lengthy time (for example 3 hours - engine running, without ever being turned off, for too long; there is something wrong, there is a possible deceit), the microcontroller would provide to automatically reopen relay R1 (thereby disconnecting the battery from the engine start up system), irrespective of the engine being in an on/off condition (and therefore of the voltage value at the battery ends) and of the condition on/off of module A, so that at the following daytime engine start up (relay R1 being open), the driver will have to endure, without side-stepping, the various checks for "fitness and regularity to drive" carried out by the system.
6) "Daily operation sequences"
   a) initial step = switching on start switch on module A
   b) to allow engine start up, the microcontroller of module B will have to:
      - with the engine off (check of the voltage values at the ends of the vehicle battery), receive the sequence of coded signals transmitted in the channels no. 1 + no. 2 + no. 3 + no. 5 (or in the sequence no. 1 + no. 1 + no. 1 - please see "system deactivation due to urgency")
   c) during circulation; if the microcontroller of module B:
      - received (at preset time intervals) signal sequences in the channels no. 1 + no. 2 + no. 3 + no. 4 + no. 5, it means that the driver is behaving correctly;
      - did not receive the entire signal sequence in the channels no. 1 + no. 2 + no. 3 + no. 4 + no. 5, the driver's behaviour is incorrect and irregular and the penalty archive will therefore be updated in the EPROM memory (by the microcontroller of module B). Such archive will then be automatically questioned (again by the microcontroller of module B) prior to any new engine start up, to verify whether there is any "compulsory waiting time" and its length (for example from 1 to 24 hours);
      - detected, through the timer/clock and the condition of the engine (on or off), that the driver has been driving uninterruptedly for too long or that the journey occurs beyond a certain preset night-time limit, it will update the relative penalty archive (with event codes 6 and/or 7);
   d) after turning off the engine (condition verified with the stage for the control of voltage values at the ends of the battery/vehicle): opening, through the microcontroller of module B, of relay R1 (= prior to the new engine start up: compulsory helmet on head, no passengers, compulsory airbag jacket, mandatory alcohol test, etc.) ;
   e) if, with the engine off, an unauthorised "connection bridge" is established between the power supply cable of the "engine start up system" and the cable of the "instrument panel + lights, etc." (checking the voltage at the ends of point A - 59 in fig. 1a - through a suitable voltage detector/comparator stage), relay R2 (usually in an always-closed position) will be opened (no power supply for the entire vehicle, since also relay R1 will be open).

It is understood, however, that the invention must not be considered as limited to the specific embodiments illustrated heretofore, which represent only example embodiments thereof, but that a number of changes may be made, all within the reach of a skilled person in the field, without departing from the scope of the invention, as defined in the following claims.

## Claims

1. Method for the safety control of two-wheel motorvehicles, of the type of motorbicycles, scooters and/or motorcycles, for the purpose of detecting and/or preventing any incorrect behaviour and driving offences committed by the rider "before" and/or "after" the starting of the vehicle engine, of the type comprising the steps of:
a) collecting helcnet-availability information coming from the rider's helmet,
b) giving consent to the starting of the motorvehicle only after this helmet-availability information has been collected,
**characterised in that**, for the purpose of a verification of the "correct and deceit-free" use of the protection helmet, it further provides the following steps:
c) instant check of the condition of "correctly worn helmet" through the activation of at least one balance sensor associated with the safety strap and/or of at least one sensor of presence,
d) issuing of a consent signal only in case said instant check provides a positive outcome,
e) processing and/or storing said consent signal in an electronic data processing unit, for the issuing of the authorisation to starting the vehicle engine only in the presence of said signal, and respectively,
f) processing and storing in said electronic data processing unit, in case of already running vehicle and of absence of said consent signal, of a signal of "future waiting time" to be paid off at one of the next starting operations of the vehicle engine.

2. Safety control method as in claim 1), **characterised in that**, for the purpose of detecting and/or preventing any inappropriate behaviour and driving offences committed by the rider "during" the running of the vehicle, it further comprises the steps of
a) performing said instant check of the condition of "correctly-worn helmet" in a "periodical" manner, and
b) in case of absence of said consent signal, processing and memorising said signal of "future waiting time" or a sum of said signals.

3. Safety control method as in claim 1), **characterised in that** the step of instant check on the state of correct wearing of the protection helmet involves the activation both of at least one sensor or instrument to check that the "helmet is worn", and of a sensor to check that its "safety strap is fastened".

4. Safety control method as claimed in claim 1), **characterised in that** said step to check the state of a vehicle in running conditions or at a standstill involves the activation of an electronic stage to reckon the voltage rates at the ends of the vehicle battery.

5. Safety control method as claimed in claim 2), **characterised in that** for each of said steps of sequence check, detecting a state of "incorrectly worn" protection helmet, a signal of "future waiting time" is sent to said processing unit, each of said signals summing up with the previous ones in the memory of said unit.

6. Safety control method as claimed in any one of the previous claims, **characterised in that** said reckoning of the functional state of the vehicle comprises a step to check, in the memory of said processing unit, the existence of one or more signals of "future waiting time" and the inhibition by said processing unit to switch on the engine and/or move the vehicle for at least a "preset waiting time".

7. Safety control method as claimed in claim 6), **characterised in that** the length of said preset waiting time varies according to the seriousness and/or number of irregularities committed.

8. Safety control method as claimed in claim 6), **characterised in that** the inhibition to use the vehicle can be definitive, until authorised operators other than the driver intervene to "unlock" the vehicle.

9. Safety control method as claimed in any one of the previous claims, **characterised in that** said sensors and/or checking instruments are associated to the vehicle and/or to the driver's helmet and/or to the driver's protection jacket, the signals of consent issued by said sensors and/or checking instruments being forwarded to said data processing unit through airway transmission channels.

10. Safety control method as claimed in claim 9), **characterised in that** said consent signals comprise a control coding.

11. Safety control method as claimed in claim 10), **characterised in that** said control coding is identical for all the sensors and/or instruments associated to the vehicle, to the driver's helmet and to his protection jacket.

12. Safety control method as in claim 9), **characterised in that** said airway transmission channels use radio-frequency signals.

13. Safety control method as claimed in claims 1), 2) or 3), **characterised in that** the step of instant checking the state of a correctly worn protection helmet comprises moreover, both during vehicle engine ignition and during vehicle circulation, at least three controls, the first one for connection of the power supply line of the processing unit installed in the helmet, the second one for activation of two sensors associated to the helmet, to detect presence in the vicinity thereof, and the third one for activation of a balance sensor associated to the helmet safety strap.

14. Safety control method as claimed in claims 1) and 4), **characterised in that** the control on the driver's conditions of "fitness and regularity to drive" also includes, before and/or after starting the vehicle, an instant checking step to control the presence of a second passenger on the vehicle.

15. Safety control method as in claim 14), **characterised in that** the check on the presence of a second passenger involves the activation of two ultrasound sensors of limited range, to detect presence within a limited range of action in front or behind the helmet.

16. Safety control method as claimed in claim 14), **characterised in that**, for an improved check on the presence of a second passenger behind the driver, it also includes the activation of a weight sensor associated to the backside of the vehicle seat.

17. Safety control method as in claim 1), **characterised in that** the control on the driver's conditions of "fitness and regularity to drive" includes moreover, with the vehicle in running conditions, an instant checking step to detect inappropriate behaviours while driving and during vehicular traffic.

18. Safety control method as claimed in claim 17), **characterised in that**, when the inappropriate behaviour consists in causing the pitching or excessive inclination of the vehicle, or its skidding, said checking step involves the activation of at least one balance sensor associated to the vehicle and/or to the driver's helmet.

19. Safety control method as claimed in claim 1), 17), 18), **characterised in that** said checking step to detect the conditions of the vehicle in running or in stopping conditions, and/or its speed, involves the activation of an electronic stage to reckon the voltage rates at the ends of the vehicle battery.

20. Safety control method as claimed in claim 17), **characterised in that**, when the dangerous manoeuvre consists in "travelling uninterruptedly for an excessively long time", said checking step involves the activation of a clock apt to count the travelling time, and the issue of a warning signal when exceeding a maximum preset time.

21. Safety control method as claimed in claim 20), **characterised in that** said maximum travelling time is reduced by a preset percentage when travelling during "night hours".

22. Safety control method as claimed in claim 21), **characterised in that** said night hours are defined by a clock.

23. Safety control method as claimed in any of the previous claims, **characterised in that**, before ignition of the vehicle engine, a test is carried out to control the "working" of at least part of the detection sensors, so as to highlight possible malfunction or tampering of such sensors.

24. Safety control method as claimed in claim 23), **characterised in that** said test to control the working involves at least the control on the pair of ultrasound sensors and on the balance sensor positioned into the helmet safety strap, to make sure that they work and have not been tampered with.

25. System for the safety control of two-wheel motorvehicles, of the type of motorbicycles, scooters and/or motorcycles, for the purpose of detecting and/or preventing any inappropriate behaviour and driving offences committed by the rider both "before" starting the vehicle engine and/or "during" circulation thereof, with the method as in claim 1) or 2), comprising:
a) means to collect helmet-availability information coming from the rider's helmet,
b) means to give consent to the starting of the motorvehicle only after this helmet-availability information has been collected,
**characterised in that**, for the purpose of a verification of the "correct and deceit-free" use of the protection helmet, it further comprises:
c) checking means for the instant checking of the condition of the vehicle and means of transmission of a carry signal of the running vehicle condition or, respectively, of the condition of the vehicle at a standstill,
d) means for the instant checking of the condition of "protection helmet used correctly" comprising at least one balance sensor associated with the safety strap and/or one sensor of presence, and means of transmission of a carry signal of said condition of the "helmet",
e) a first electronic data processing unit, associated with the vehicle, for the processing and/or memorisation of said carry signals coming from said checking means, as well as for the issuing of an authorisation to the starting of the vehicle engine and, respectively, for the memorisation of a signal of "future waiting time", in case of already running vehicle, and
f) means to allow the starting of the vehicle engine under the control of said electronic data processing unit.

26. System for the safety control of two-wheel motorvehicles as claimed in claim 25), **characterised in that** said means to check the state of "correct wearing" of the protection helmet comprise one or more ultrasound sensors, positioned in the outer surface of the helmet, and a start switch.

27. System for the safety control of two-wheel motorvehicles as claimed in claim 25), **characterised in that** said means to check the state of "correct wearing" of the protection helmet comprise at least one sensor to detect the "fastening" of the safety strap of the protection helmet.

28. System for the safety control of two-wheel motorvehicles as claimed in claim 27), **characterised in that** said sensor detecting the fastening of the safety strap incorporates a "balance" sensor associated to said strap.

29. System for the safety control of two-wheel motorvehicles as claimed in claim 28), **characterised in that** said balance sensor consists of a mercury switch, or the like, apt to issue a consent signal when placed in a "horizontal" or substantially horizontal position.

30. System for the safety control of two-wheel motorvehicles as claimed in any one of claims 26) to 29), **characterised in that**, to said protection helmet there are associated a second electronic data processing unit, to process the data issued by the sensor of fastened safety strap, by the balance sensor, by at least one sensor of presence, and means for the airway transmission of a signal generated by said processing.

31. System for the safety control of two-wheel motorvehicles as claimed in claims 30), **characterised in that** said second electronic data processing units comprise storage means.

32. System for the safety control of two-wheel motorvehicles as claimed in claims 25), 30), **characterised in that** said first and second electronic data processing units form an "integrated system", into which the exchange of information is obtained by airway, said first processing unit being mounted on the vehicle and forming a control unit of the other processing unit.

33. System for the safety control of two-wheel motorvehicles as claimed in claim 25), **characterised in that** it also comprises at least one sensor of presence, apt to detect the presence of people and/or alien objects close to the vehicle and/or to the protection helmet.

34. System for the safety control of two-wheel motorvehicles as claimed in claim 33), **characterised in that** said sensor of presence and/or objects consists of an ultrasound sensor, with detection of the return echo, positioned in the rear and/or front part of the protection helmet and apt to detect any such presence and/or objects within a very limited preset distance around the protection helmet.

35. System for the safety control of two-wheel motorvehicles as claimed in claim 25), **characterised in that** it comprises means to detect any dangerous manoeuvres, such as the driver falling off from the vehicle, said means including at least one balance sensor, preferably a mercury sensor, positioned into the safety strap of the protection helmet and/or a balance sensor positioned inside the processing unit installed in the vehicle.

36. System for the safety control of two-wheel motorvehicles as claimed in claim 25), to detect incorrect behaviours while driving, such as manoeuvres causing pitching or excessive inclination or skidding of the vehicle, **characterised in that** it comprises two "balance sensors" respectively associated to the vehicle and to the safety strap of the protection helmet.

37. System for the safety control of two-wheel motorvehicles as claimed in claim 25), to detect the "presence of unallowed passengers on the vehicle", **characterised in that** it comprises two of said ultrasound sensors of presence, positioned in the rear part and in the front part of the driver's protection helmet.

38. System for the safety control of two-wheel motorvehicles as claimed in claims 25) and 37), **characterised in that**, to detect more efficiently the presence of unallowed passengers on the vehicle, behind the driver, it also comprises at least one weight sensor positioned into the rear part of the vehicle seat.

39. System for the safety control of two-wheel motorvehicles as claimed in claim 25), **characterised in that**, to detect an exceedingly long uninterrupted circulation time of the vehicle, said first control unit comprises time counting means in association with means apt to check the functional state of the vehicle, whether at a stop/off, or in motion.

40. System for the safety control of two-wheel motorvehicles as claimed in claim 39), **characterised in that** it also comprises clock means, to check the day-time or night-time circulation of the vehicle.

41. System for the safety control of two-wheel motorvehicles as claimed in claim 25), **characterised in that** said means to check the conditions of the vehicle, in running conditions or at a standstill, consist of an electronic stage to detect the voltage rates at the ends of the vehicle battery.

42. System for the safety control of two-wheel motorvehicles as claimed in claims 25) or 41), **characterised in that** it comprises two relay switches, on the power supply of the vehicle ignition device and on the power supply of the other electric equipment of the vehicle, respectively, as well as means to close and/or open said relays in order to start or stop the vehicle under the control of said first data processing unit installed in the vehicle.

## Patentansprüche

1. Verfahren zur Steuerung bzw. Regelung bzw. Kontrolle der Sicherheit eines zweirädrigen Motorfahrzeugs in Form eines Mofas, Rollers und/oder Motorrads, zum Zwecke der Erkennung und/oder der Vermeidung inkorrekten Verhaltens und von Verkehrsregelverstößen durch den Fahrer "vor" und/oder "nach" dem Start des Fahrzeugmotors, wobei das Verfahren die folgenden Schritte umfasst:
a) Erfassung von Helm-Verfügbarkeits-Informationen von dem Helm des Fahrers,
b) Erteilung der Zustimmung zum Starten des Motorfahrzeugs ausschließlich nachdem diese Helm-Verfügbarkeits-Information erfasst worden ist,
**dadurch gekennzeichnet, dass** es zum Zweck der Verifikation des "korrekten und täuschungsfreien" Gebrauchs des Schutzhelms zudem die folgenden Schritte umfasst:
c) unverzügliche Überprüfung des Zustands eines "korrekt getragenen Helms" durch eine Aktivierung von zumindest einem Balance-Sensor, der dem Sicherheits-Riemen zugeordnet ist, und/oder zumindest einem Anwesenheits-Sensor,
d) Abgabe eines Zustimmungs-Signals ausschließlich in dem Fall, dass die unverzügliche Überprüfung positiv verläuft,
e) Verarbeitung und/oder Speicherung des Zustimmungs-Signals in einer elektronischen Datenverarbeitungs-Einheit, um die Freigabe zum Starten des Motors des Fahrzeugs nur bei dem Vorliegen des Signals zu geben, bzw.
f) im Falle eines bereits im Betrieb befindlichen bzw. fahrenden Fahrzeugs und in Abwesenheit des Zustimmungs-Signals Verarbeitung und Speicherung eines Signals für eine "zukünftige Wartezeit", die bei einer der nächsten Start-Operationen des Motors des Fahrzeugs abzuwarten ist, in der elektronischen Datenverarbeitungs-Einheit.

2. Verfahren zur Kontrolle der Sicherheit nach Anspruch 1, **dadurch gekennzeichnet, dass** es zum Zwecke der Erkennung und/oder der Vermeidung inkorrekten Verhaltens und von Verkehrsregelverstößen durch den Fahrer "während" des Betriebs des Fahrzeugs die folgenden Schritte umfasst:
a) Durchführen der unverzüglichen Überprüfung des Zustands des "korrekt getragenen Helms" auf "regelmäßige" Weise und
b) im Falle der Abwesenheit des Zustimmungs-Signals, Verarbeitung und Speicherung des Signals für eine "zukünftige Wartezeit" oder eine Summe dieser Signale.

3. Verfahren zur Kontrolle der Sicherheit nach Anspruch 1, **dadurch gekennzeichnet, dass** der Schritt der unverzüglichen Überprüfung des Zustands des korrekt getragenen Schutzhelms die Aktivierung sowohl des zumindest einen Sensors als auch des zumindest einen Instruments zur Überprüfung, dass "der Helm getragen" wird, und eines Sensors, dass der "Sicherheits-Riemen geschlossen" ist, umfasst.

4. Verfahren zur Kontrolle der Sicherheit nach Anspruch 1, **dadurch gekennzeichnet, dass** der Schritt zur Überprüfung, ob das Fahrzeug bereits im Betrieb befindlich ist oder stillsteht, die Aktivierung einer elektronischen Vorrichtung umfasst, um die Spannungen an den Polen der Batterie des Fahrzeugs zu erfassen.

5. Verfahren zur Kontrolle der Sicherheit nach Anspruch 2, **dadurch gekennzeichnet, dass** für jeden der Schritte im Ablauf der Kontrolle, bei der Erfassung eines Zustands eines "nicht korrekt getragenen Schutzhelms", ein Signal für eine "zukünftige Wartezeit" an die Datenverarbeitungs-Einheit geschickt wird, wobei sich alle Signale mit den vorhergehenden in dem Speicher der Einheit aufsummieren.

6. Verfahren zur Kontrolle der Sicherheit nach einem der vorstehenden Ansprüche, **dadurch gekennzeichnet, dass** die Erfassung des Betriebs-Zustands des Fahrzeugs einen Kontroll-Schritt, ob in dem Speicher der Datenverarbeitungs-Einheit ein Signal oder mehrere Signale für eine "zukünftige Wartezeit" existiert bzw. existieren, und eine Verhinderung des Anlassens des Motors und/oder der Bewegung des Fahrzeugs für zumindest eine "voreingestellte Wartezeit" umfasst.

7. Verfahren zur Kontrolle der Sicherheit nach Anspruch 6, **dadurch gekennzeichnet, dass** die Länge der voreingestellten Wartezeit entsprechend der Schwere und/oder der Zahl der vorgefallenen Unregelmäßigkeiten variiert.

8. Verfahren zur Kontrolle der Sicherheit nach Anspruch 6, **dadurch gekennzeichnet, dass** die Verhinderung der Benutzung des Fahrzeugs endgültig sein kann, bis ein autorisierter Bediener, der nicht der Fahrer ist, interveniert, um das Fahrzeug zu "entsperren".

9. Verfahren zur Kontrolle der Sicherheit nach einem der vorstehenden Ansprüche, **dadurch gekennzeichnet, dass** die Sensoren und/oder die Kontroll-Instrumente dem Fahrzeug und/oder dem Helm des Fahrers und/oder der Schutz-Jacke des Fahrers zugeordnet sind, wobei das Signal zur Zustimmung, das von den Sensoren und/oder den Kontroll-Instrumenten abgegeben wird, über einen drahtlosen Übertragungsweg an die Datenverarbeitungs-Einheit weitergeleitet wird.

10. Verfahren zur Kontrolle der Sicherheit nach Anspruch 9, **dadurch gekennzeichnet, dass** die Zustimmungs-Signale einen verschlüsselten Steuerbefehl umfassen.

11. Verfahren zur Kontrolle der Sicherheit nach Anspruch 10, **dadurch gekennzeichnet, dass** der verschlüsselte Steuerbefehl für alle Sensoren und/oder alle Instrumente, die dem Fahrzeug zugeordnet sind, mit dem des Helms des Fahrers und seiner Schutz-Jacke identisch ist.

12. Verfahren zur Kontrolle der Sicherheit nach Anspruch 9, **dadurch gekennzeichnet, dass** der drahtlose Übertragungsweg Radio-Frequenz-Signale verwendet.

13. Verfahren zur Kontrolle der Sicherheit nach einem der Ansprüche 1, 2 oder 3, **dadurch gekennzeichnet, dass** der Schritt der unverzüglichen Überprüfung des Zustands eines korrekt getragenen Helms zudem, sowohl während einem Zünden des Motors des Fahrzeugs als auch während der Fahrt des Fahrzeugs, zumindest drei Kontrollen umfasst, wobei die erste die Verbindung der Stromversorgungsleitung der Datenverarbeitungseinheit, die im Helm installiert ist, betrifft, die zweite die Aktivierung von zwei Sensoren betrifft, die dem Helm zugeordnet sind, um eine Anwesenheit in dessen Umgebung zu erfassen, und wobei die dritte die Aktivierung eines Balance-Sensors umfasst, der dem Sicherheits-Riemen zugeordnet ist.

14. Verfahren zur Kontrolle der Sicherheit nach einem der Ansprüche 1 und 4, **dadurch gekennzeichnet, dass** die Kontrolle des Zustands des Fahrers hinsichtlich dessen "Fitness und Fahrhäufigkeit" auch einen unverzüglichen Kontroll-Schritt zur Kontrolle, ob sich ein zweiter Passagier auf dem Fahrzeug befindet, vor und/oder nach dem Starten des Fahrzeugs umfasst.

15. Verfahren zur Kontrolle der Sicherheit nach Anspruch 14, **dadurch gekennzeichnet, dass** die Kontrolle, ob sich ein zweiter Passagier auf dem Fahrzeug befindet, die Aktivierung von zwei Ultraschall-Sensoren umfasst, die einen begrenzten Arbeitsradius aufweisen, um dessen Anwesenheit in einem begrenzten Umkreis vor oder hinter dem Helm zu erfassen.

16. Verfahren zur Kontrolle der Sicherheit nach Anspruch 14, **dadurch gekennzeichnet, dass** es zur verbesserten Kontrolle, ob sich ein zweiter Passagier hinter dem Fahrer auf dem Fahrzeug befindet, zudem die Aktivierung eines Gewichtssensors umfasst, der der Rückseite des Sitzes des Fahrzeugs zugeordnet ist.

17. Verfahren zur Kontrolle der Sicherheit nach Anspruch 1, **dadurch gekennzeichnet, dass** die Kontrolle des Zustands des Fahrers hinsichtlich dessen "Fitness und Fahrhäufigkeit" zudem einen unverzüglichen Kontroll-Schritt dann, wenn sich das Fahrzeug bewegt, umfasst, um unangemessene Verhaltensweisen während des Fahrens und während der Bewegung des Fahrzeugs im Verkehr zu erfassen.

18. Verfahren zur Kontrolle der Sicherheit nach Anspruch 17, **dadurch gekennzeichnet, dass** dann, wenn die unangemessene Verhaltensweise darin besteht, dass das Fahrzeug hochgezogen oder übermäßig geneigt wird oder schleudert, der Kontroll-Schritt die Aktivierung von zumindest einem Balance-Sensor umfasst, der dem Fahrzeug und/oder dem Helm des Fahrers zugeordnet ist.

19. Verfahren zur Kontrolle der Sicherheit nach Anspruch 1, 17 oder 18, **dadurch gekennzeichnet, dass** der Kontroll-Schritt zur Erfassung der Zustände des Fahrzeugs im Zustand des Fahrens oder im Zustand des Stillstehens und/oder dessen Geschwindigkeit die Aktivierung einer elektronischen Vorrichtung umfasst, um die Spannungen an den Polen der Batterie des Fahrzeugs zu erfassen.

20. Verfahren zur Kontrolle der Sicherheit nach Anspruch 17, **dadurch gekennzeichnet, dass** dann, wenn das gefährliche Manöver darin besteht, dass "ununterbrochen während einer exzessiv langen Zeit gefahren" wird, der Kontroll-Schritt die Aktivierung einer Uhr umfasst, die ausgebildet ist, um die gefahrene Zeit zu zählen und dann ein Warn-Signal auszugeben, wenn eine voreingestellte maximale Zeit überschritten ist.

21. Verfahren zur Kontrolle der Sicherheit nach Anspruch 20, **dadurch gekennzeichnet, dass** die voreingestellte maximale Zeit für die Fahrt um einen voreingestellten Prozentsatz reduziert wird, wenn während "nächtlicher Zeit" gefahren wird.

22. Verfahren zur Kontrolle der Sicherheit nach Anspruch 21, **dadurch gekennzeichnet, dass** die nächtliche Zeit mittels einer Uhr ermittelt wird.

23. Verfahren zur Kontrolle der Sicherheit nach einem der vorstehenden Ansprüche, **dadurch gekennzeichnet, dass** vor dem Zünden des Motors des Fahrzeugs ein Test ausgeführt wird, um das "Funktionieren" von zumindest einem Teil des Erfassungs-Sensors zu kontrollieren, um so eine etwaige Fehlfunktion oder Manipulation eines solchen Sensors zu erkennen.

24. Verfahren zur Kontrolle der Sicherheit nach Anspruch 23, **dadurch gekennzeichnet, dass** der Test zur Kontrolle des Funktionierens zumindest die Kontrolle des Paars an Ultraschall-Sensoren und des Balance-Sensors umfasst, der bzw. die in dem Sicherheits-Riemen des Helms angeordnet ist bzw. sind, um sicherzustellen, dass diese funktionieren und sie nicht manipuliert worden sind.

25. System zur Sicherheits-Kontrolle eines zweirädrigen Motorfahrzeugs in Form eines Mofas, Rollers und/oder Motorrads, zum Zwecke der Erkennung und/oder der Vermeidung unangemessenen Verhaltens und von Verkehrsregelverstößen durch den Fahrer "vor" dem Start des Fahrzeugmotors und/oder "während" dessen Fahrt mit dem Verfahren nach einem der Ansprüche 1 oder 2, mit:
a) einem Mittel zur Erfassung von Helm-Verfügbarkeits-Informationen von dem Helm des Fahrers,
b) einem Mittel zur Erteilung der Zustimmung zum Starten des Motorfahrzeugs ausschließlich nachdem diese Helm-Verfügbarkeits-Information erfasst worden ist,
**dadurch gekennzeichnet, dass** es zum Zweck der Verifikation des "korrekten und täuschungsfreien" Gebrauchs des Schutzhelms zudem Folgendes umfasst:
c) ein Kontrollmittel zur unverzüglichen Überprüfung des Zustands des Fahrzeugs und Mittel zur Übertragung eines Träger-Signals für den Zustand, dass das Fahrzeug fährt oder entsprechend dem Zustand, dass das Fahrzeug stillsteht,
d) einem Mittel zur unverzüglichen Überprüfung des Zustands "Schutzhelm wird korrekt benutzt", das zumindest einen Balance-Sensor, der dem Sicherheits-Riemen zugeordnet ist, und/oder einen Anwesenheits-Sensor und Mittel zum Übertragen eines Träger-Signals für den Zustand des "Helms" umfasst,
e) eine erste elektronische Datenverarbeitungs-Einheit, die dem Fahrzeug zugeordnet ist, zur Verarbeitung und/oder zur Speicherung der Träger-Signale von dem Kontrollmittel sowie zur Abgabe einer Freigabe zum Starten des Motors des Fahrzeugs bzw. zur Speicherung eines Signals für eine "zukünftige Wartezeit", wenn das Fahrzeug bereits fährt, und
f) einem Mittel zur Ermöglichung des Startens des Motors des Fahrzeugs unter der Steuerung bzw. Regelung bzw. Kontrolle der elektronischen Datenverarbeitungs-Einheit.

26. System zur Sicherheits-Kontrolle eines zweirädrigen Motorfahrzeugs nach Anspruch 25, **dadurch gekennzeichnet, dass** das Mittel zur Kontrolle des Zustands des "korrekten Tragens" des Schutzhelms zumindest einen oder mehrere Ultraschall-Sensoren, die in der äußeren Oberfläche des Helms angeordnet sind, und einen Start-Schalter umfasst.

27. System zur Sicherheits-Kontrolle eines zweirädrigen Motorfahrzeugs nach Anspruch 25, **dadurch gekennzeichnet, dass** das Mittel zur Kontrolle des Zustands des "korrekten Tragens" des Schutzhelms zumindest einen Sensor zum Erfassen des "Anlegens" des Sicherheits-Riemens" des Schutzhelms umfasst.

28. System zur Sicherheits-Kontrolle eines zweirädrigen Motorfahrzeugs nach Anspruch 27, **dadurch gekennzeichnet, dass** der Sensor, der das Anlegen des Sicherheits-Riemens erfasst, einen "Balance"-Sensor umfasst, der dem Riemen zugeordnet ist.

29. System zur Kontrolle der Sicherheit eines zweirädrigen Motorfahrzeugs nach Anspruch 28, **dadurch gekennzeichnet, dass** der Balance-Sensor aus einem Quecksilber-Schalter oder Ähnlichem besteht, der ausgebildet ist, um ein Zustimmungs-Signal abzugeben, wenn er in einer "horizontalen" oder im Wesentlichen horizontalen Position angeordnet ist.

30. System zur Sicherheits-Kontrolle eines zweirädrigen Motorfahrzeugs nach einem der Ansprüche 26 bis 29, **dadurch gekennzeichnet, dass** dem Schutzhelm eine zweite elektronische Datenverarbeitungs-Einheit zum Verarbeiten von Daten, die durch den Sensor für den geschlossenen Sicherheits-Riemen für den Balance-Sensor abgegeben worden sind, und ein Mittel zur drahtlosen Übertragung des Signals, das von der Verarbeitungs-Einheit erzeugt worden ist, zugeordnet sind.

31. System zur Sicherheits-Kontrolle eines zweirädrigen Motorfahrzeugs nach Anspruch 30, **dadurch gekennzeichnet, dass** die zweiten elektronischen Datenverarbeitungs-Einheiten Speichermittel umfassen.

32. System zur Sicherheits-Kontrolle eines zweirädrigen Motorfahrzeugs nach einem der Ansprüche 25 oder 30, **dadurch gekennzeichnet, dass** die erste und die zweite elektronische Datenverarbeitungs-Einheit ein "integriertes System" bilden, das drahtlose Informationen empfangen kann, wobei die erste Verarbeitungs-Einheit an dem Fahrzeug montiert ist und eine Steuer- bzw. Kontroll-Einheit für die andere Verarbeitungs-Einheit darstellt.

33. System zur Sicherheits-Kontrolle eines zweirädrigen Motorfahrzeugs nach Anspruch 25, **dadurch gekennzeichnet, dass** es zudem zumindest einen Anwesenheits-Sensor umfasst, der ausgebildet ist, um die Anwesenheit von Personen und/oder fremden Objekten zu erfassen, die sich dicht bei dem Fahrzeug und/oder dicht bei dem Schutzhelm befinden.

34. System zur Sicherheits-Kontrolle eines zweirädrigen Motorfahrzeugs nach Anspruch 33, **dadurch gekennzeichnet, dass** der Anwesenheitssensor und/oder Objekte aus einem Ultraschall-Sensor bestehen, die das zurückkehrende Echo detektieren und die im rückwärtigen und/oder vorderen Teil des Schutzhelms angeordnet sind, und die ausgebildet sind, um eine jegliche Anwesenheit und/oder Objekte in einem sehr begrenzten Abstand um den Schutzhelm zu detektieren.

35. System zur Sicherheits-Kontrolle eines zweirädrigen Motorfahrzeugs nach Anspruch 25, **dadurch gekennzeichnet, dass** es Mittel zum Detektieren gefährlicher Manöver umfasst, beispielsweise solcher, bei denen der Fahrer von dem Fahrzeug fällt, wobei das Mittel zumindest einen Balance-Sensor, der vorzugsweise ein Quecksilber-Sensor ist und in dem Sicherheits-Riemen des Schutzhelms angeordnet ist, und/oder einen Balance-Sensor, der in der Verarbeitungs-Einheit angeordnet ist, die in dem Fahrzeug installiert ist, umfasst.

36. System zur Sicherheits-Kontrolle eines zweirädrigen Motorfahrzeugs nach Anspruch 25 zum Erfassen von falschen Verhaltensweisen während des Fahrens, wie beispielsweise von Manövern, die ein Hochziehen oder eine exzessive Neigung oder ein Schleudern des Fahrzeugs hervorrufen, **dadurch gekennzeichnet, dass** es zwei "Balance-Sensoren" umfasst, die dem Fahrzeug bzw. dem Sicherheits-Riemen des Schutzhelms zugeordnet sind.

37. System zur Sicherheits-Kontrolle eines zweirädrigen Motorfahrzeugs nach Anspruch 25 zum Detektieren der "Anwesenheit nicht erlaubter Passagiere auf dem Fahrzeug", **dadurch gekennzeichnet, dass** es zwei der Ultraschall-Anwesenheits-Sensoren umfasst, die in dem rückwärtigen Teil und in dem vorderen Teil des Schutzhelms des Fahrers angeordnet sind.

38. System zur Sicherheits-Kontrolle eines zweirädrigen Motorfahrzeugs nach einem der Ansprüche 25 und 37, **dadurch gekennzeichnet, dass** es zudem zumindest einen Gewichtssensor umfasst, der in dem rückwärtigen Teil des Sitzes des Fahrzeugs angeordnet ist, um die Anwesenheit nicht erlaubter Passagiere hinter dem Fahrer auf dem Fahrzeug effizienter zu detektieren.

39. System zur Sicherheits-Kontrolle eines zweirädrigen Motorfahrzeugs nach Anspruch 25, **dadurch gekennzeichnet, dass** die erste Steuer- bzw. Kontroll-Einheit ein Zeitmessmittel umfasst, das mit Mitteln in Verbindung steht, die ausgebildet sind, um den funktionalen Zustand des Fahrzeugs, ob es stillsteht, ausgeschaltet ist oder sich in Bewegung befindet, zu kontrollieren, um eine exzessiv lange ununterbrochene Zeit zu detektieren, während der das Fahrzeug gefahren ist.

40. System zur Sicherheits-Kontrolle eines zweirädrigen Motorfahrzeugs nach Anspruch 39, **dadurch gekennzeichnet, dass** es zudem ein Uhren-Mittel umfasst, um die Zeit zu erfassen, während der das Fahrzeug während der Tageszeit oder der Nachtzeit fährt.

41. System zur Sicherheits-Kontrolle eines zweirädrigen Motorfahrzeugs nach Anspruch 25, **dadurch gekennzeichnet, dass** das Mittel zur Kontrolle des Zustands des Fahrzeugs, ob es sich im fahrenden Zustand befindet oder stillsteht, aus einer elektronischen Vorrichtung besteht, die die Spannung an den Polen der Batterie des Fahrzeugs umfasst.

42. System zur Sicherheits-Kontrolle eines zweirädrigen Motorfahrzeugs nach einem der Ansprüche 25 oder 41, **dadurch gekennzeichnet, dass** es zwei Relais, eines in der Stromversorgung der Zünd-Vorrichtung des Fahrzeugs bzw. eines in der Stromversorgung der anderen elektrischen Ausrüstung des Fahrzeugs und zudem Mittel umfasst, um die Relais zu schließen und/oder zu öffnen, um das Fahrzeug unter der Steuerung bzw. der Kontrolle der ersten Datenverarbeitungs-Einheit, die in dem Fahrzeug installiert ist, zu starten oder zu stoppen.

## Revendications

1. Procédé de contrôle de la sécurité des véhicules à moteur à deux-roues du type des cyclomoteurs, scooters et/ou motos, aux fins de détecter et/ou d'empêcher tout comportement incorrect et toute infraction commise par le conducteur « avant » et/ou « après » le démarrage du moteur du véhicule, du type comprenant les étapes consistant à :
a) collecter les informations relatives à la disponibilité du casque provenant du casque du conducteur,
b) consentir au démarrage du véhicule à moteur uniquement après avoir collecté ces informations relatives à la disponibilité du casque,
**caractérisé en ce que**, aux fins de vérifier l'utilisation « correcte et sans fraude » du casque de protection, il fournit en outre les étapes suivantes consistant à :
c) vérifier instantanément l'état de « port correct du casque » en activant au moins un capteur d'équilibre associé à la courroie de sécurité et/ou au moins un capteur de présence,
d) émettre un signal de consentement uniquement dans le cas où ladite vérification instantanée fournit un résultat positif,
e) traiter et/ou enregistrer ledit signal de consentement dans une unité de traitement de données électroniques, pour émettre l'autorisation de démarrage du moteur du véhicule uniquement en présence dudit signal, et respectivement,
f) traiter et enregistrer dans ladite unité de traitement de données électroniques, dans le cas d'un véhicule déjà en marche et d'absence dudit signal de consentement, d'un signal de « temps d'attente futur » à éteindre lors de l'une des opérations de démarrage ultérieures du moteur du véhicule.

2. Procédé de contrôle de la sécurité selon la revendication 1, **caractérisé en ce que**, aux fins de détecter et/ou d'empêcher tout comportement inapproprié et toute infraction commise par le conducteur « lors » de la circulation du véhicule, il comprend en outre les étapes consistant à :
a) réaliser ladite vérification instantanée de l'état de « port correct du casque » de façon « périodique », et
b) en cas d'absence dudit signal de consentement, traiter et mémoriser ledit signal de « temps d'attente futur » ou une somme desdits signaux.

3. Procédé de contrôle de la sécurité selon la revendication 1, **caractérisé en ce que** l'étape de vérification instantanée de l'état de port correct du casque de protection implique l'activation d'au moins un capteur ou d'un instrument pour vérifier que « le casque est porté », ainsi que d'un capteur pour vérifier que sa « courroie de sécurité est attachée ».

4. Procédé de contrôle de la sécurité selon la revendication 1, **caractérisé en ce que** ladite étape de vérification de l'état d'un véhicule en circulation ou à l'arrêt implique l'activation d'un système électronique pour calculer le régime de la tension aux extrémités de la batterie du véhicule.

5. Procédé de contrôle de la sécurité selon la revendication 2, **caractérisé en ce que**, pour chacune desdites étapes de vérification de séquence, de détection d'un état de « port incorrect » du casque de protection, un signal de « temps d'attente futur » est envoyé à ladite unité de traitement, chacun desdits signaux venant s'ajouter auxdits signaux précédents dans la mémoire de ladite unité.

6. Procédé de contrôle de la sécurité selon l'une quelconque des revendications précédentes, **caractérisé en ce que** ledit calcul de l'état fonctionnel du véhicule comprend une étape de vérification, dans la mémoire de ladite unité de traitement, de l'existence d'au moins un signal de « temps d'attente futur » et de l'empêchement, par ladite unité de traitement, de démarrer le moteur et/ou de déplacer le véhicule pendant au moins un « temps d'attente prédéfini ».

7. Procédé de contrôle de la sécurité selon la revendication 6, **caractérisé en ce que** la longueur dudit temps d'attente prédéfini varie en fonction de la gravité et/ou du nombre d'irrégularités commises.

8. Procédé de contrôle de la sécurité selon la revendication 6, **caractérisé en ce que** l'empêchement d'utiliser le véhicule peut être définitive, jusqu'à ce que des opérateurs agréés autres que le conducteur interviennent pour « débloquer » le véhicule.

9. Procédé de contrôle de la sécurité selon l'une quelconque des revendications précédentes, **caractérisé en ce que** lesdits capteurs et/ou instruments de vérification sont associés au véhicule et/ou au casque du conducteur et/ou à la veste de protection du conducteur, les signaux de consentement émis par lesdits capteurs et/ou les instruments de vérification étant transmis à ladite unité de traitement de données par l'intermédiaire de canaux de transmission aériens.

10. Procédé de contrôle de la sécurité selon la revendication 9, **caractérisé en ce que** lesdits signaux de consentement comprennent un codage de contrôle.

11. Procédé de contrôle de la sécurité selon la revendication 10, **caractérisé en ce que** ledit codage de contrôle est identique pour tous les capteurs et/ou instruments associés au véhicule, au casque du conducteur et à sa veste de protection.

12. Procédé de contrôle de la sécurité selon la revendication 9, **caractérisé en ce que** lesdits canaux de transmission aériens utilisent des signaux radioélectriques.

13. Procédé de contrôle de la sécurité selon la revendication 1, 2 ou 3, **caractérisé en ce que** l'étape de vérification instantanée de l'état de port correct du casque de protection comprend, en outre, à la fois pendant l'allumage du moteur du véhicule et pendant la circulation du véhicule, au moins trois contrôles, le premier pour le raccord de la ligne d'alimentation électrique de l'unité de traitement installée dans le casque, le deuxième pour l'activation de deux capteurs associés au casque, pour détecter toute présence à proximité de celui-ci, et le troisième pour l'activation d'un capteur d'équilibre associé à la courroie de sécurité du casque.

14. Procédé de contrôle de la sécurité selon les revendications 1 et 4, **caractérisé en ce que** le contrôle de l'état de « forme et de régularité pour conduire » du conducteur inclut également, avant et/ou après le démarrage du véhicule, une étape de vérification instantanée pour contrôler la présence d'un deuxième passager sur le véhicule.

15. Procédé de contrôle de la sécurité selon la revendication 14, **caractérisé en ce que** la vérification de la présence d'un deuxième passager implique l'activation de deux capteurs à ultrasons à portée limitée, pour détecter la présence sur une portée limitée d'action à l'avant ou à l'arrière du casque.

16. Procédé de contrôle de la sécurité selon la revendication 14, **caractérisé en ce que**, pour une vérification améliorée de la présence d'un deuxième passager derrière le conducteur, il inclut également l'activation d'un capteur de poids associé à l'arrière du siège du véhicule.

17. Procédé de contrôle de la sécurité selon la revendication 1, **caractérisé en ce que** le contrôle de l'état de « forme et de régularité pour conduire » du conducteur inclut en outre, lorsque le véhicule circule, une étape de vérification instantanée pour détecter tout comportement inapproprié lors de la conduite et de trafic routier.

18. Procédé de contrôle de la sécurité selon la revendication 17, **caractérisé en ce que**, lorsque le comportement inapproprié consiste à provoquer le tangage ou l'inclinaison excessive du véhicule, ou son embardée, ladite étape de vérification implique l'activation d'au moins un capteur d'équilibre associé au véhicule et/ou au casque du conducteur.

19. Procédé de contrôle de la sécurité selon la revendication 1, 17 ou 18, **caractérisé en ce que** ladite étape de vérification pour détecter les états du véhicule en circulation ou à l'arrêt, et/ou sa vitesse, implique l'activation d'un système électronique pour calculer le régime de tension aux extrémités de la batterie du véhicule.

20. Procédé de contrôle de la sécurité selon la revendication 17, **caractérisé en ce que**, lorsque la manoeuvre dangereuse consiste en « une conduite ininterrompue sur une durée excessivement longue », ladite étape de vérification implique l'activation d'une horloge capable de comptabiliser le temps de conduite, et l'émission d'un signal d'avertissement lors du dépassement de la durée prédéfinie maximale.

21. Procédé de contrôle de la sécurité selon la revendication 20, **caractérisé en ce que** ledit temps de conduite maximum est réduit d'un pourcentage prédéfini en cas de conduite « pendant les heures de nuit ».

22. Procédé de contrôle de la sécurité selon la revendication 21, **caractérisé en ce que** lesdites « heures de nuit » sont définies par une horloge.

23. Procédé de contrôle de la sécurité selon l'une quelconque des revendications précédentes, **caractérisé en ce que**, avant l'allumage du moteur du véhicule, un test est réalisé pour contrôler le « fonctionnement » d'au moins une partie des capteurs de détection, de manière à dévoiler d'éventuels dysfonctionnements ou bricolages de ces capteurs.

24. Procédé de contrôle de la sécurité selon la revendication 23, **caractérisé en ce que** ledit test pour contrôler le fonctionnement implique au moins le contrôle de la paire de capteurs à ultrasons, et du capteur d'équilibre positionné dans la courroie de sécurité du casque, pour s'assurer qu'ils fonctionnent correctement et qu'ils n'ont pas été bricolés.

25. Système de contrôle de la sécurité des véhicules à moteur à deux-roues du type des cyclomoteurs, scooters et/ou motos, aux fins de détecter et/ou d'empêcher tout comportement incorrect et toute infraction commise par le conducteur « avant » le démarrage du moteur du véhicule et/ou « lors » de la circulation de celui-ci, selon le procédé de la revendication 1 ou 2, comprenant :
a) un moyen permettant de collecter des informations relatives à la disponibilité du casque provenant du casque du conducteur,
b) un moyen permettant de consentir au démarrage du véhicule à moteur uniquement après avoir collecté ces informations relatives à la disponibilité du casque,
**caractérisé en ce que**, aux fins d'une vérification de l'utilisation « correcte et sans fraude » du casque de protection, il comprend en outre :
c) un moyen de vérification pour la vérification instantanée de l'état du véhicule et un moyen de transmission d'un signal porteur de l'état du véhicule en circulation ou, respectivement, de l'état du véhicule à l'arrêt,
d) un moyen de vérification instantanée de l'état « d'utilisation correcte du casque de protection » comprenant au moins un capteur d'équilibre associé à la courroie de sécurité et/ou un capteur de présence, et un moyen de transmission d'un signal porteur dudit état du « casque »,
e) une première unité de traitement de données électroniques, associée au véhicule, pour le traitement et/ou la mémorisation desdits signaux porteurs provenant dudit moyen de vérification, ainsi que pour l'émission d'une autorisation de démarrer le moteur du véhicule et, respectivement, pour la mémorisation d'un signal de « temps d'attente futur », dans le cas d'une véhicule déjà en circulation, et
f) un moyen permettant le démarrage du moteur du véhicule sous le contrôle de ladite unité de traitement de données électroniques.

26. Système de contrôle de la sécurité des véhicules à moteur à deux-roues selon la revendication 25, **caractérisé en ce que** ledit moyen permettant de vérifier l'état de « port correct » du casque de protection comprend au moins un capteur à ultrasons, positionné dans la surface externe du casque, et un commutateur de démarrage.

27. Système de contrôle de la sécurité des véhicules à moteur à deux-roues selon la revendication 25, **caractérisé en ce que** ledit moyen permettant de vérifier l'état de « port correct » du casque de protection comprend au moins un capteur pour détecter « l'attache » de la courroie de sécurité du casque de protection.

28. Système de contrôle de la sécurité des véhicules à moteur à deux-roues selon la revendication 27, **caractérisé en ce que** ledit capteur détectant l'attache de la courroie de sécurité intègre un capteur « d'équilibre » associé à ladite courroie.

29. Système de contrôle de la sécurité des véhicules à moteur à deux-roues selon la revendication 28, **caractérisé en ce que** ledit capteur d'équilibre consiste en un commutateur à mercure, ou similaire, capable d'émettre un signal de consentement lorsqu'il est placé à « l'horizontale » ou dans une position sensiblement horizontale.

30. Système de contrôle de la sécurité des véhicules à moteur à deux-roues selon l'une quelconque des revendications 26 à 29, **caractérisé en ce qu'**une deuxième unité de traitement des données électroniques est associée audit casque de protection pour traiter les données émises par le capteur de la courroie de sécurité attachée, par le capteur d'équilibre, par au moins un capteur de présence et un moyen pour la transmission aérienne d'un signal généré par ledit traitement ;

31. Système de contrôle de la sécurité des véhicules à moteur à deux-roues selon la revendication 30, **caractérisé en ce que** ladite deuxième unités de traitement de données électroniques comprend un moyen d'enregistrement.

32. Système de contrôle de la sécurité des véhicules à moteur à deux-roues selon les revendications 25 et 30, **caractérisé en ce que** lesdites première et deuxième unités de traitement de données électroniques forment un « système intégré », dans lequel l'échange d'informations est obtenu par voie aérienne, ladite première unité de traitement étant montée sur le véhicule et formant une unité de contrôle de l'autre unité de traitement.

33. Système de contrôle de la sécurité des véhicules à moteur à deux-roues selon la revendication 25, **caractérisé en ce qu'**il comprend au moins un capteur de présence, capable de détecter la présence de personne et/ou d'objets étrangers à proximité du véhicule et/ou du casque de protection.

34. Système de contrôle de la sécurité des véhicules à moteur à deux-roues selon la revendication 33, **caractérisé en ce que** ledit capteur de présence et/ou d'objets consiste en un capteur à ultrasons, avec détection de l'écho de retour, positionné à l'arrière et/ou à l'avant du casque de protection, et capable de détecter toute présence et/ou objet dans un périmètre prédéfini très limité, autour du casque de protection.

35. Système de contrôle de la sécurité des véhicules à moteur à deux-roues selon la revendication 25, **caractérisé en ce qu'**il comprend des moyens de détection de toute manoeuvre dangereuse, telle qu'une chute du conducteur du véhicule, ledit moyen incluant au moins un capteur d'équilibre, de préférence un capteur à mercure, positionné dans la courroie de sécurité du casque de protection et/ou un capteur d'équilibre positionné à l'intérieur de l'unité de traitement installée dans le véhicule.

36. Système de contrôle de la sécurité des véhicules à moteur à deux-roues selon la revendication 25, pour détecter tout comportement incorrect lors de la conduite, tels que des manoeuvres provoquant le tangage ou l'inclinaison excessive du véhicule, ou son embardée, **caractérisé en ce qu'**il comprend deux « capteurs d'équilibre », associés respectivement au véhicule et à la courroie de sécurité du casque de protection.

37. Système de contrôle de la sécurité des véhicules à moteur à deux-roues selon la revendication 25, permettant de détecter la « présence de passagers non autorisés sur le véhicule », **caractérisé en ce qu'**il comprend deux desdits capteurs à ultrasons de présence, positionnés à l'arrière et à l'avant du casque de protection du conducteur.

38. Système de contrôle de la sécurité des véhicules à moteur à deux-roues selon les revendications 25 et 37, **caractérisé en ce que**, pour détecter plus efficacement la présence de passagers non autorisés sur le véhicule, derrière le conducteur, il comprend également au moins un capteur de poids positionné dans la partie arrière du siège du véhicule.

39. Système de contrôle de la sécurité des véhicules à moteur à deux-roues selon la revendication 25, **caractérisé en ce que**, pour détecter un temps de circulation ininterrompue excessivement long du véhicule, ladite première unité de contrôle comprend un moyen de comptabilisation du temps en association au moyen capable de vérifier l'état fonctionnel du véhicule, à l'arrêt aussi bien qu'en mouvement.

40. Système de contrôle de la sécurité des véhicules à moteur à deux-roues selon la revendication 39, **caractérisé en ce qu'**il comprend un moyen d'horloge, pour vérifier la circulation de jour comme de nuit du véhicule.

41. Système de contrôle de la sécurité des véhicules à moteur à deux-roues selon la revendication 25, **caractérisé en ce que** ledit moyen permettant de vérifier les états du véhicule, en circulation ou à l'arrêt, consiste en un système électronique pour détecter le régime de tension aux extrémités de la batterie du véhicule.

42. Système de contrôle de la sécurité des véhicules à moteur à deux-roues selon la revendication 25 ou 41, **caractérisé en ce qu'**il comprend deux commutateurs à relais, sur l'alimentation électrique du dispositif d'allumage du véhicule et sur l'alimentation électrique de l'autre équipement électrique du véhicule, respectivement, ainsi que d'un moyen pour fermer et/ou ouvrir lesdits relais, afin de démarrer ou d'arrêter le véhicule sous le contrôle de ladite première unité de traitement de données installées dans le véhicule.
